**Europäisches Patentamt**

**European Patent Office**

**Office européen des brevets**

(19)

(11) Numéro de publication : **0 423 119 B1**

(12) # FASCICULE DE BREVET EUROPEEN

(45) Date de publication du fascicule du brevet :
**14.12.94 Bulletin 94/50**

(51) Int. Cl.$^5$ : **H04L 27/10**

(21) Numéro de dépôt : **89901333.8**

(22) Date de dépôt : **23.11.88**

(86) Numéro de dépôt international :
**PCT/FR88/00571**

(87) Numéro de publication internationale :
**WO 90/06030 31.05.90 Gazette 90/12**

(54) **PROCEDE ET DISPOSITIF DE TRANSMISSION DE DONNEES NUMERIQUES.**

(43) Date de publication de la demande :
**24.04.91 Bulletin 91/17**

(45) Mention de la délivrance du brevet :
**14.12.94 Bulletin 94/50**

(84) Etats contractants désignés :
**AT BE CH DE GB IT LI LU NL SE**

(56) Documents cités :
**FR-A- 2 615 678**
**US-A- 3 566 033**
**US-A- 3 668 562**
**US-A- 4 066 841**

(73) Titulaire : **Marchand, Renaud**
**F-33410 Cadillac sur Garonne (FR)**
Titulaire : **Bonnaval-Lamothe, Michel**
**Côte-Belle**
**F-33410 Cadillac sur Garonne (FR)**
Titulaire : **SOCIETE DE RECHERCHE**
**DEVELOPEMENT ET APPLICATION EN**
**MATIERE BREVETABLE (SRDAMB)**
**33, Boulevard Saint-Denis**
**F-92400 Courbevoie (FR)**

(72) Inventeur : **PIRIM, Patrick**
**1, allée des Catalpas**
**F-78390 Montigny-le-Broteneux (FR)**

(74) Mandataire : **Thébault, Jean-Louis**
**Cabinet Thébault S.A.**
**1 Allées de Chartres**
**F-33000 Bordeaux (FR)**

## Description

L'invention concerne un procédé et un dispositif de transmission de données numériques se présentant sous la forme d'une succession de mots. Elle vise, pour une bandes de fréquences de transmission donnée, à permettre un débit de transmission élevé.

Elle s'applique en particulier pour transmettre des données numériques représentatives d'une image, dans lesquelles chaque mot représente une caractéristique spectrale (luminance, chrominance...) d'un point de l'image.

On connaît actuellement un système de transmission de données numériques se présentant sous la forme d'une succession de mots, dans lequel les mots sont successivement convertis en un signal analogique à fréquence variable, dont la fréquence est représentative de la valeur desdits mots, chaque période dudit signal possédant une durée proportionnelle à la valeur d'un mot de la succession à transmettre. Ce signal analogique est transmis par tout moyen et notamment par une liaison téléphonique, et est ensuite décodé sur le lieu de réception à l'aide d'une boucle à verrouillage de phase délivrant une tension proportionnelle à la fréquence d'entrée ; cette tension est ensuite convertie en un signal numérique afin de reconstituer les données numériques de départ.

Le défaut essentiel de ce type de système provient de ce que chaque mot nécessite au minimum une période du signal analogique pour représenter sa valeur. Cette limitation qui résulte, d'une part, du principe même du procédé, d'autre part, de la nature des moyens de décodage utilisé (asservissement de la boucle à verrouillage de phase exigeant au moins une période) entraîne pour une bande de transmission de fréquence donnée, un débit de transmission (en mots par seconde) limité à la valeur de ladite fréquence. De plus, dans un tel système, il est nécessaire d'introduire entre mots ou groupes de mots des impulsions de synchronisme permettant de reconnaître la position relative des données en raison du principe de décodage au moyen d'une boucle à verrouillage de phase qui engendre une indétermination dans la position des mots. En outre, les boucles à verrouillage de phase sont utilisées dans ces systèmes à la limite de leurs possibilités et sont extrêmement délicates à régler sur le plan industriel.

Par ailleurs, on connaît par US-A-4.066.841 un procédé de transmission de données numériques sous la forme d'une succession de mots, dans lequel les données sont converties en un signal analogique, puis transmises et décodées pour être converties en un signal numérique représentatif des données. Cependant, le principe de codage-décodage utilisé ne permet de faire passer qu'un débit de mots limité et dans une bande de transmission étroite, ce qui confère audit procédé une rapidité de transmission ne pouvant pas dépasser un seuil de 4 à 5000 Bauds.

La présente invention se propose de pallier les défauts des systèmes connus sus-évoqués.

Un objectif essentiel de l'invention est d'indiquer un nouveau procédé de transmission dans lequel le codage des données numériques et leur décodage permettent un débit de transmission élevé pour une bande de fréquences déterminée, ce débit pouvant être très supérieur à celui du système connu pour une fidélité de transmission analogue.

Un autre objectif est de fournir un décodage des données dans lequel les mots sont parfaitement positionnés en l'absence de tout signal auxiliaire de synchronisation.

Un autre objectif est de fournir un dispositif de transmission n'impliquant aucune difficulté industrielle de réglage.

Un autre objectif est de fournir un dispositif dont les fonctions soient susceptibles d'être cablées dans un circuit intégré du type "VLSI" ("Very large scale integration").

Un autre objectif est de fournir un dispositif de coût, de volume et de consommation énergétique réduits.

A cet effet, l'invention a pour objet un procédé de transmission de données numériques se présentant sous la forme d'une succession de mots en vue de permettre un débit de transmission élevé pour une bande de fréquences de transmission déterminée, dans lequel (a) dans une phase de codage, les données sont converties en un signal analogique périodique élaboré à partir des données numériques en engendrant à partir desdites données et d'une fréquence de référence un signal numérique de fréquence fonction desdites données dans une base de temps liée à la fréquence de référence, de façon que chaque période dudit signal numérique soit composée de p fractions de période, chacune fonction d'un mot des données, en opérant sur ledit signal numérique une fonction de transfert périodique de forme prédéterminée, notamment sinusoïdale, de façon à engendrer un signal numérique transcodé représentatif du signal précédent et ayant une répartition périodique liée à ladite fonction de transfert, et en effectuant une conversion numérique/analogique dudit signal transcodé, (b) ledit signal analogique est transmis et (c) dans une phase de décodage, ledit signal est converti en un signal numérique représentatif des données élaboré à partir du signal analogique transmis, en convertissant ce dernier en un signal numérique par un échantillonage à une seconde fréquence de référence liée à la première, en élaborant à partir de ce signal numérique et de la fonction de transfert, des seuils de travail délimitant dans ledit signal numérique p fractions de période correspondant à celles du codage, en analysant le signal numérique entre lesdits seuils de travail dans une base de temps correspondant à la fréquence de référence, de façon à engendrer un signal numérique représentatif des durées entre seuils de travail, et en calculant à partir de ce signal numérique la succession de mots des données, caractérisé en ce que ledit nombre p de fractions de période est supérieur à 2.

En particulier, le procédé conforme à l'invention consiste :

a) dans la phase de codage,

. à engendrer un premier signal électrique de référence de temps (H₁), comprenant des impulsions de référence à fréquence élevée (F),

. à charger successivement un paramètre (A + M) fonction de chaque mot (M₁, M₂...) dans un registre de stockage sur commande d'un signal de chargement (Ch) composé d'une succession d'impulsions de chargement,

. à diviser le signal de référence (H₁) par le paramètre (A + M) contenu dans le registre de stockage pour délivrer un signal temporel de données (Td) ayant une fréquence $(F/_{A}+_{M})$ variant de façon discrète en fonction inverse de la succession de mots $(F/_{A+M1}, F/_{A+M2}...)$,

. à effectuer un comptage modulo n du signal temporel de données (Td) en vue de délivrer un signal numérique (Nv) constitué par les valeurs de comptage, n étant un nombre entier choisi en fonction d'une fidélité de transmission désirée,

. à effectuer une combinaison linéaire dudit signal numérique (Nv) de façon à valider ce signal en pas à pas, au moyen de pas d'incrémentation en nombre égal à p, p étant supérieur à 2 et égal ou inférieur à n, de durées $d_1, d_2... d_i... d_p$, en vue d'engendrer le signal de chargement (Ch) précité comprenant une impulsion de chargement à la fin de chaque pas,

. à opérer une fonction de transfert périodique à fréquence $\dfrac{F}{n.(A + M)}$ sur le signal numérique (Nv), de façon à délivrer un signal numérique transcodé (Nt) représentatif des niveaux de la fonction de transfert pour les valeurs du signal numérique (Nv),

. à convertir le signal numérique transcodé (Nt) en un signal analogique (Sa) d'amplitude maximum calibré, en vue de délivrer un signal analogique périodique ayant pour enveloppe la fonction de transfert précitée et dont chaque période est composée de p fractions de période, chacune fonction d'un mot (M₁, M₂...),

b) à transmettre ce signal analogique (Sa) et à le recevoir avec une adaptation appropriée (S″a),

c) dans la phase de décodage :

. à engendrer un second signal électrique de référence de temps (H₂), de fréquence (F′) liée à la fréquence (F) du premier signal de référence (H₁) dans un rapport constant λ = F/F′,

. à convertir le signal analogique adapté (S″a), avec une fréquence d'échantillonnage F′, en un signal numérique (Ne) image du signal numérique transcodé (Nt),

. à extraire et mémoriser les bornes minimale et maximale (MIN, MAX) dudit signal numérique (Ne), en vue d'engendrer des données d'amplitude (D_A) caractérisant le signal (Ne),

. à mémoriser pour chacun des p pas d'incrémentation précités, d'une part, au moins deux seuils de la fonction périodique de transfert pour une amplitude normalisée de celle-ci, d'autre part, les écarts temporels entre lesdits seuils rapportés à la période de la fonction de transfert, lesdits seuils étant désignés par "seuils normalisés" et lesdits écarts par "écarts normalisés",

. à effectuer une remise à l'échelle desdits seuils normalisés en fonction des données d' amplitude (D_A), en vue d'obtenir des valeurs de seuil décalées en fonction desdites données d'amplitude, dits seuils de travail,

. à comparer le signal numérique (Ne) aux seuils de travail en vue d'engendrer un signal numérique (Na) validé pendant les durées entre seuils de travail,

. à compter le nombre d'impulsions de référence du second signal de référence (H₂) en présence du signal numérique validé (Na), de façon à engendrer un signal numérique (Nd) à plusieurs valeurs de comptage représentatives des durées pendant lesquelles le signal numérique validé (Na) est présent,

. à diviser chaque valeur du signal numérique (Nd) précité par l'écart normalisé correspondant, en vue d'engendrer une succession de valeurs (Vs), chacune rapportée à la période de la fonction périodique de transfert,

. pour chaque pas d'incrémentation, à opérer, le cas échéant, la moyenne desdites valeurs (Vs) en vue d'engendrer un signal numérique (Nm) à p valeurs moyennes (Vm) fonction de la succession des mots (M₁, M₂...),

. dans le cas où F′ est différent de F, à multiplier chacune desdites p valeurs moyennes par le coefficient λ en vue d'obtenir une succession de p valeurs corrigées (Vc),

. à diviser chaque valeur corrigée (Vc) précitée par un paramètre fonction du modulo n en vue d'obtenir une succession de résul-

tats $(A + M_1, A + M_2...)$ et à en déduire la succession de mots $(M_1, M_2...)$ constituant les données numériques.

Ainsi, dans le procédé de l'invention, chaque mot est représenté par un pas d'incrémentation qui correspond à une fraction de la période du signal transmis. En particulier, la fonction de transfert périodique choisie peut être une fonction sinusoïdale dont la période est divisée en quatre pas d'incrémentation de même durée, de sorte que le signal analogique transmis (Sa), d'allure sinusoïdale, porte quatre mots par période. Le signal de chargement (Ch) est alors engendré par une combinaison linéaire du signal numérique (Nv), en validant ce signal sur ces quatre pas d'incrémentation. Chaque pas correspond à un quart de période de la fonction de transfert et donc à un quart de période du signal analogique : de la sorte, le nombre de mots transmis est dans cet exemple égal à 4 fois la fréquence de la bande de transmission, soit un facteur multiplicateur égal à 4 par rapport au système antérieur.

Comme on le verra par la suite, cette division de la période en 4 pas présente des avantages pour autoriser une bonne fidélité de reproduction (en raison du nombre d'échantillons élevé dans chaque pas) et un décodage facile (car cette division correspond à des calculs binaires extrêmement simples). Toutefois, le procédé de l'invention permet de choisir un nombre de pas d'incrémentation différents, et notamment plus élevé, en particulier huit (deux pas par quart de période), avec une fidélité moindre mais une cadence de transmission plus importante.

De plus, dans le procédé de l'invention, le décodage s'effectue par un asservissement numérique qui élimine tous les inconvénients des boucles à verrouillage de phase. En outre, lors du décodage, le signal numérique (Nd) est engendré par un comptage du second signal de référence temporelle $(H_2)$ entre seuils de travail, de sorte que les valeurs obtenues, représentatives des durées entre seuils, sont décorrelées du bruit affectant le signal analogique transmis.

Dans le cas préférentiel d'une fonction de transfert sinusoïdale, les valeurs de comptage constituant le signal numérique (Nv) sont transformées en niveaux de sinusoïde, répartis sur chaque pas d'incrémentation et en particulier sur chaque quart de période, afin de fournir le signal numérique transcodé (Nt). Le nombre -n- de niveaux de sinusoïde pour chaque période (nombre défini par le comptage modulo n) conditionne la précision de signal analogique (Sa) qui est transmis. En pratique, l'on effectuera un comptage binaire modulo $n = 2^b$ du signal temporel (Td), avec $b \geq 6$ et notamment égal à 7 ou 8 de façon à avoir, à la fois, une bonne précision et une fréquence techniquement réalisable du signal de référence de temps $(H_1)$. Le signal numérique (Nv) issu du comptage susévoqué est alors un signal binaire à b bits de poids croissants.

Dans la phase de codage, la fonction sinusoïdale de transfert peut être opérée par tout moyen connu, et notamment par calcul. Toutefois, une mémorisation préalable de cette fonction sous forme de table conduit à un dispositif plus simple et plus rapide. Cette table contient les données représentatives des valeurs, modulo n, de la fonction de transfert à des adresses prédéterminées. La fonction de transfert est alors réalisée en adressant successivement ladite table au moyen des valeurs de comptage binaire du signal numérique (Nv) et en extrayant simultanément les données correspondantes contenues dans la table.

Par ailleurs, le signal analogique transmis est avantageusement adapté à sa réception, d'une part, en lui ajoutant une composante continue telle que le signal résultant, dit signal analogique décalé (S'a), garde toujours le même signe, d'autre part, en amplifiant ledit signal analogique décalé avec un gain variable réglé séquentiellement de façon à délivrer un signal analogique amplifié (S"a) s'étendant sur une amplitude maximale prédéterminée.

Dans la phase de décodage, la conversion est alors réalisée sur ce signal analogique amplifié (S"a) par un convertisseur analogique/numérique ayant une plage de conversion égale à l'amplitude maximale précitée.

Cette adaptation permet d'assurer le décodage avec un maximum de sensibilité en utilisant toute la plage opérationnelle du convertisseur.

En outre, dans la phase de décodage, les opérations de remise à l'échelle, de comparaison du signal numérique (Ne) aux seuils de travail, de comptage des impulsions du second signal de référence $(H_2)$ en présence du signal numérique validé, de division par l'écart normalisé, de calcul de moyenne, de multiplication par le coefficient $(\lambda)$, de division par la valeur corrigée (Vc) et d'extraction des mots peuvent être effectuées successivement en temps réel en flot continu de données, compte-tenu du caractère traditionnel de ces opérations et des moyens cablés rapides disponibles pour les effectuer. On évite ainsi des mises en mémoire et séquencements intermédiaires, ce qui conduit à un dispositif simplifié et à une rapidité accrue.

L'invention s'étend à un dispositif de transmission de données numériques, permettant de mettre en oeuvre le procédé défini précédemment. Ce dispositif comprend un ensemble de codage pour convertir les données en un signal analogique (Sa) représentatif de celles-ci, des moyens de transmission et d'adaptation du signal analogique et un ensemble de décodage en vue de reconstituer lesdites données numériques. L'ensemble de codage comprend une horloge de fréquence (F), des moyens de génération du signal numérique (Nv) de fréquence fonction de (F) et des mots des données (M), un transcodeur périodique, et un convertisseur numérique/analogique ; l'ensemble de décodage comprend une horloge de fréquence (F') liée à la fréquence (F), un convertisseur analogique/numérique séquencé par l'horloge pour délivrer le signal numérique (Ne), des moyens de génération des seuils de travail à partir de ce signal (Ne), des moyens d'analyse dudit signal numérique (Ne) entre lesdits seuils de travail, et des moyens de calcul de la succession de mots.

Selon un mode de réalisation préférentiel, l'ensemble de codage se caractérise en ce qu'il comprend la combinaison de moyens suivante : une horloge pour engendrer le premier signal électrique de référence de temps (H₁), un registre de stockage commandé par le signal de chargement (Ch) en vue de charger successivement les paramètres (A + M) fonction des données numériques, un diviseur programmable agencé pour recevoir le premier signal de référence de temps (H₁) et les paramètres (A + M) issus du registre en vue de délivrer le signal temporel de données (Td), un compteur modulo n agencé pour recevoir ledit signal temporel de données (Td) en vue de délivrer le signal numérique (Nv), un opérateur linéaire logique agencé pour recevoir le signal numérique (Nv) en vue de valider ce signal en pas à pas et d'engendrer le signal de chargement (Ch), un transcodeur périodique agencé pour recevoir le signal numérique (Nv) en vue de délivrer le signal numérique transcodé (Nt) représentatif des niveaux de la fonction de transfert pour les valeurs dudit signal numérique, et un convertisseur numérique/analogique agencé pour recevoir le signal numérique transcodé (Nt) et un signal de calibrage (Ref) en vue de délivrer le signal analogique (Sa).

En outre, l'ensemble de décodage se caractérise en ce qu'il comprend la combinaison de moyens suivante : une horloge pour engendrer le second signal électrique de référence de temps (H₂), un convertisseur analogique/numérique agencé pour recevoir le signal analogique transmis (S″a) et le second signal de référence de temps (H₂) en vue de délivrer le signal numérique (Ne) à partir dudit signal analogique, des opérateurs logiques agencés pour recevoir le signal numérique (Ne) en vue de délivrer les données d'amplitude (D_A), des moyens de mémorisation des seuils normalisés de la fonction périodique de transfert, des moyens de mémorisation des écarts normalisés de ladite fonction périodique de transfert, des opérateurs logiques agencés pour recevoir les seuils normalisés issus des moyens de mémorisation et les données d'amplitude (D_A) en vue de délivrer les seuils de travail, des comparateurs agencés pour recevoir les seuils de travail et le signal numérique (Ne) en vue de valider ledit signal numérique pendant les durées entre seuils de travail, des compteurs recevant le signal numérique validé (Na) et le second signal de référence de temps (H₂) en vue de délivrer le signal numérique (Nd) à valeurs représentatives des durées entre seuils de travail, des moyens de calcul agencés pour recevoir le signal numérique (Nd), les écarts normalisés issus des moyens de mémorisation, éventuellement la valeur (A) correspondant au paramétrage (A + M), éventuellement le coefficient (λ), et le second signal de référence de temps (H₂), en vue d'effectuer séquentiellement des opérations de calcul pour délivrer la succession des mots constituant les données numériques.

Le procédé et le dispositif de l'invention sont illustrés par la description qui suit en référence aux dessins annexés, lesquels visent plus particulièrement l'application à la transmission d'une image par réseau téléphonique commuté ; sur ces dessins qui font partie intégrante de la présente description :

- la figure 1 est un synoptique fonctionnel de l'ensemble de codage d'un dispositif de transmission conforme à l'invention,
- les figures 2 et 3 sont des chronogrammes illustrant les signaux essentiels issus des divers organes de l'ensemble de codage en vue d'engendrer le signal analogique Sa,
- la figure 4 est un synoptique fonctionnel de moyens d'adaptation de ligne en vue d'engendrer à partir du signal Sa un signal adapté S″a se prêtent au décodage,
- la figure 5 est un synoptique fonctionnel de l'ensemble de décodage du dispositif,
- la figure 6 est un chronogramme illustrant les étapes essentielles du décodage.

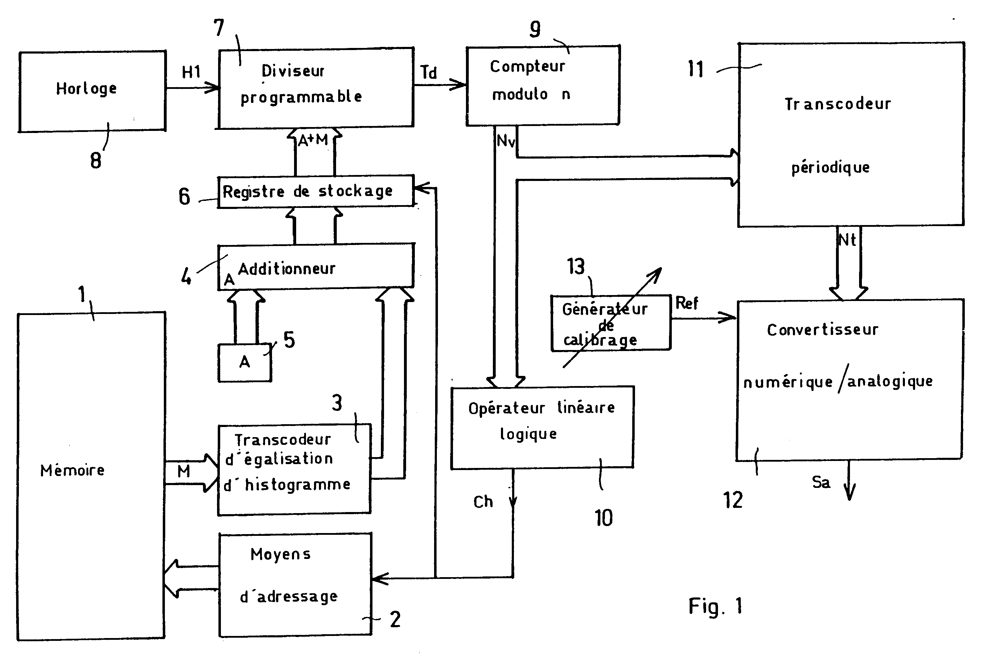

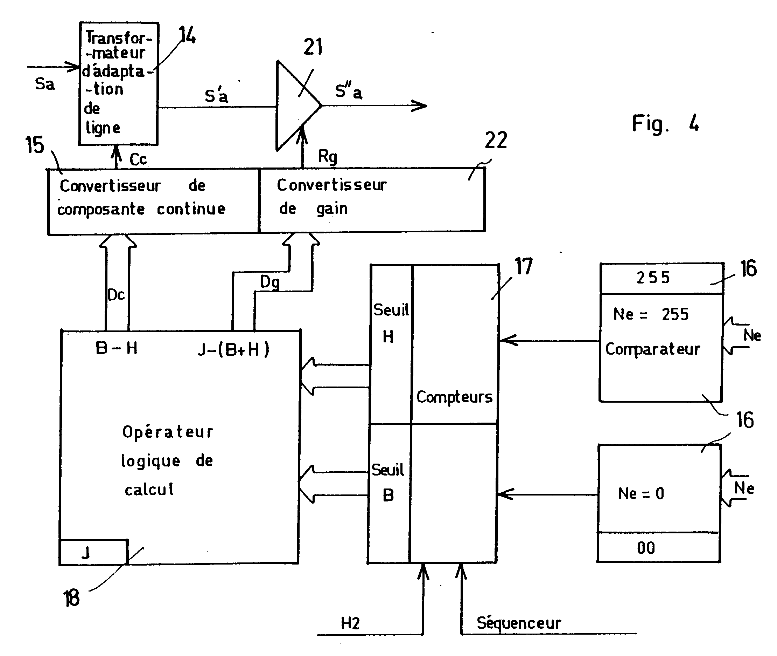

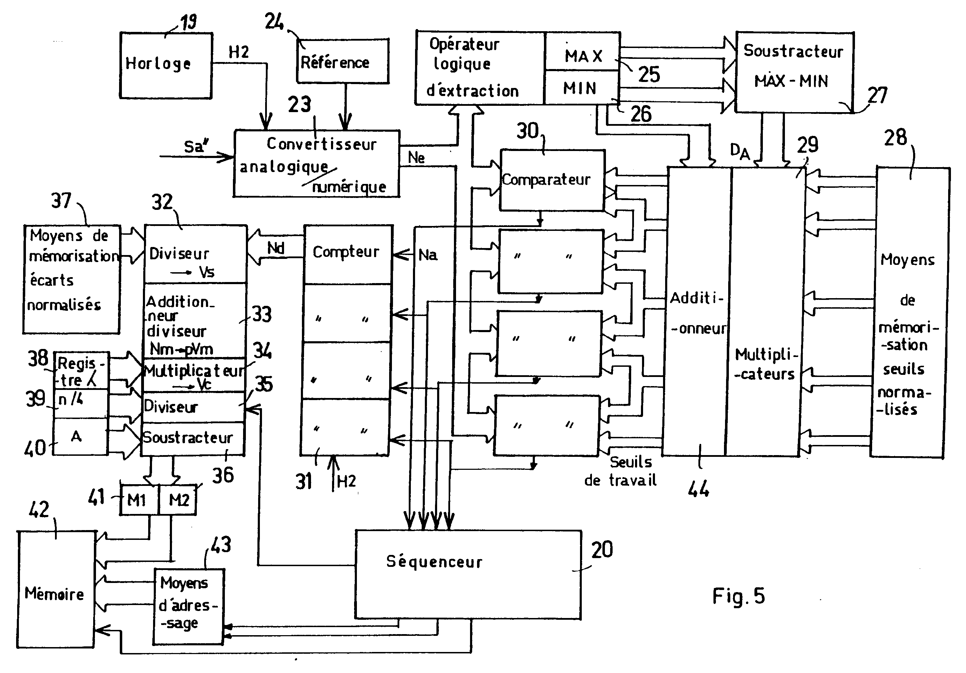

L'ensemble de codage représente à titre d'exemple à la figure 1, les moyens d'adaptation représentés à la figure 4 et l'ensemble de décodage représenté à la figure 5 peuvent en particulier être utilisés pour transmettre des données numériques (M) représentatives d'une image vidéo. Cette image est représentée par une succession de mots (M₁, M₂, M₃...), chacun attaché à un point de l'image et donnant le niveau de gris de celui-ci parmi un nombre (G) de niveaux discrets prédéterminés. Dans l'exemple illustré plus loin, le spectre de luminance a été divisé en 64 niveaux de gris différents. Chaque mot est alors constitué par un nombre binaire compris entre 0 et 63. Le nombre de points d'une image peut être de l'ordre de 60 000, chaque image étant représentée par 60 000 mots successifs.

L'ensemble de codage (figure 1) comprend, en premier lieu, une mémoire 1 de stockage préalable des données numériques (M), dans laquelle sont mémorisés les divers mots constitutifs de l'image (M₁, M₂, M₃...) dans un ordre séquentiel.

Cette mémoire 1 est adressée par des moyens d'adressage 2 que délivrent séquentiellement les adresses successives des mots contenus dans ladite mémoire. Ces moyens d'adressage 2 sont commandés par un signal de chargement (Ch) qui conditionne la transmission de chaque adresse vers la mémoire et active la sélection séquentielle des mots.

Chaque mot ($M_1$, $M_2$...) présenté en sortie de la mémoire 1 est en l'exemple traité dans un transcodeur d'égalisation d'histogramme 3 avant d'être introduit dans un additionneur 4. Ce transcodeur 3 de type classique en lui-même est adapté pour délivrer des données numériques corrigées ayant un spectre réparti sur l'ensemble des niveaux possibles des données. Par exemple, si pour une image donnée les mots correspondent à des niveaux compris entre 0 et 20 (image très foncée), le transcodeur 3 grâce à une table mémorisée les répartit de façon statistique entre 0 et 63 afin d'augmenter la dynamique de vision à la réception et de faciliter la détection au décodage.

L'additionneur 4 reçoit les mots issus du transcodeur et une constante (A) mémorisée dans un registre 5.

Dans l'application sus-évoquée, la constante A est de préférence choisie à une valeur comprise entre 2 G et 3,5 G, par exemple de l'ordre de 2,5 G (où G est le nombre de niveaux de gris) ; pour 64 niveaux de gris, A est notamment pris égal à 154. Cette plage pour le paramètre A représente un compromis optimal permettant de réduire la largeur de la bande de fréquences de transmission occupée, tout en conservant des écarts relatifs des signaux transmis suffisants pour être détectés de façon satisfaisante.

Le paramètre (A + M) fonction de chaque mot (A + $M_1$, A + $M_2$...) qui est présent en sortie de l'additionneur 4 est chargé séquentiellement dans un registre de stockage 6 sur commande du signal de chargement (Ch).

Ce registre de stockage 6 est relié à une entrée d'un diviseur programmable 7 qui reçoit le paramètre (A + M) et, sur son autre entrée, un signal ($H_1$), dit premier signal de référence du temps, issu d'une horloge 8 de fréquence élevée (F). En l'exemple, cette fréquence peut être de l'ordre de 60 mégahertz.

Le diviseur 7 divise en continu le signal de référence ($H_1$) par le paramètre (A + $M_1$, A + $M_2$...) contenu à chaque séquence dans le registre 6 en vue de délivrer un signal temporel de données (Td), ayant une fréquence séquentiellement variable ($F/_{A+M1}$, $F/_{A+M2}$) fonction de la succession de mots ($M_1$, $M_2$...).

Ce signal temporel de données (Td) est délivré à l'entrée d'un compteur binaire 9 modulo n qui donne en sortie un signal numérique binaire (Nv) constitué d'une succession de valeurs de comptage. Ce comptage répétitif de période $n = 2^b$ est de préférence effectué de façon que $b \geqq 6$ afin que le signal analogique synthétisé en sortie possède une bonne définition. (Le signal binaire (Nv) est constitué de b bits de poids croissants). En l'exemple visé, b = 7 représente un bon compromis pour obtenir une bonne définition du signal analogique, tout en prévoyant un signal d'horloge ($H_1$) de fréquence compatible avec les impératifs technologiques (en effet pour une plage de fréquences désirée pour le signal analogique (Sa), il est nécessaire de choisir une fréquence d'horloge

($H_1$), d'autant plus grande que le modulo de comptage n est grand).

Le signal numérique binaire (Nv) est en premier lieu délivré vers un opérateur linéaire logique 10 en vue d'engendrer le signal de chargement (Ch) déjà évoqué ; cet opérateur 10 valide le signal (Nv) en pas en pas suivant p pas d'incrémentation sur chaque durée de comptage modulo n. Le nombre p de pas est nécessairement inférieur (ou égal) à la valeur n du modulo de comptage. Ces pas peuvent avoir des durées différentes $d_1$, $d_2$..., di..., dp.

Dans l'exemple visé, le nombre de pas p est choisi égal à 4 d'égale durée, le début du premier pas coïncidant avec le 0 du comptage modulo $n = 2^7$.

Cet opérateur linéaire logique 10 délivre le signal de chargement (Ch) qui est constitué par une impulsion de chargement à la fin de chaque pas d'incrémentation. Comme déjà indiqué, ce signal (Ch) sert à commander, d'une part, les moyens d'adressage 2, d'autre part, le chargement du registre 6 de sorte que les mots ($M_1$, $M_2$...) sont présentés au diviseur programmable 7 au rythme d'un mot par pas.

D'autre part, le signal numérique binaire (Nv) est délivré vers un transcodeur périodique 11 apte à opérer une fonction de transfert sinusoïdale sur le signal (Nv) à fréquence $\dfrac{F}{n.(A + M)}$.

Ce transcodeur 11 peut être très simplement constitué par une mémoire qui contient des données représentatives des valeurs, modulo n, de la fonction sinusoïdale de transfert à des adresses prédéterminées. Cette mémoire est ainsi adressée séquentiellement par le signal (Nv) issu du compteur 9 et délivre en sortie un signal numérique transcodé (Nt) (en l'exemple binaire).

En l'exemple décrit où p = 4, chaque quart de période de la fonction de transfert correspond à un pas d'incrémentation.

Les valeurs de comptage (variant de 0 à n) du signal numérique binaire (Nv) (chacune représentative d'un mot) sont ainsi transformées par le transcodeur périodique 11 en niveaux équidistants de sinusoïde répartis sur une période, qui constituent le signal numérique transcodé (Nt) (4n niveaux par période).

Ce signal numérique transcodé (Nt) est ensuite transformé en signal analogique dans un convertisseur numérique/analogique 12. Afin d'adapter l'amplitude du signal aux normes de transmission, un signal de calibrage (Ref) est engendré dans un générateur de calibrage 13 ajustable sur commande externe pour servir de référence d'amplitude au convertisseur 12.

On engendre ainsi un signal périodique analogique (Sa) de fréquence variable, dont chaque quart de période est représentatif d'un mot ($M_1$, $M_2$, $M_3$...). Ce signal de fréquence $\dfrac{F}{n.(A + M)}$ est transmis sur une ligne téléphonique. Chaque période de ce signal porte 4 mots de sorte que le débit de transmission est 4 fois plus élevé que dans les procédés classiques ; de plus lorsque M varie ($M_1$, $M_2$...), la fréquence $F/_{n.(A+M)}$ du signal (Sa) varie dans une plage beaucoup plus étroite que dans le cas de ces procédés classiques (pour des variations identiques des données M).

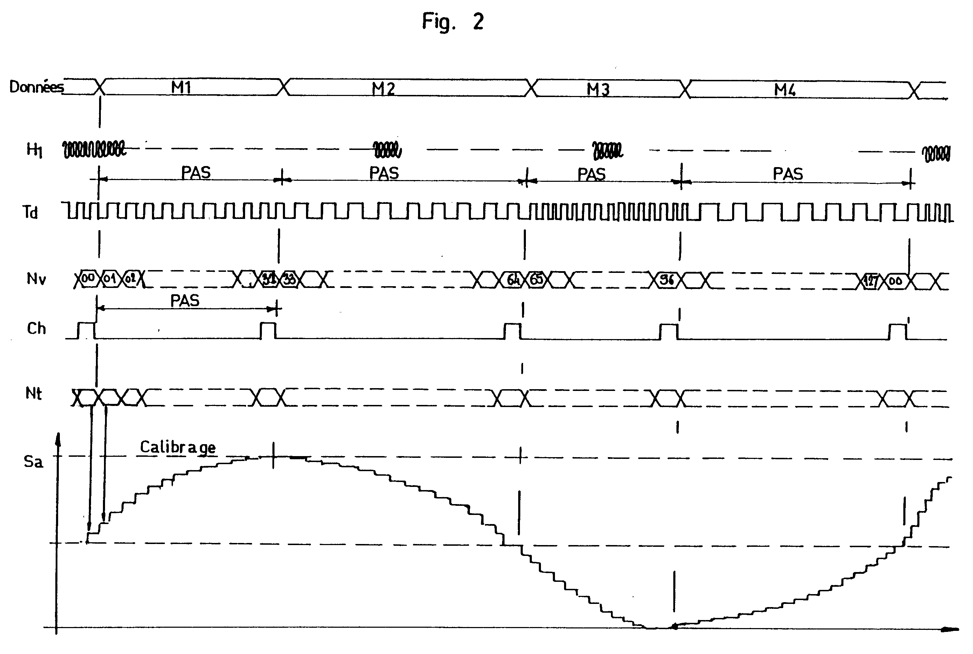

Pour illustrer la génération du signal analogique (Sa), le chronogramme de la figure 2 symbolise successivement :

- les données numériques (M) constituées par la succession de mots binaires ($M_1$, $M_2$, $M_3$...),
- le signal de référence de temps ($H_1$) de fréquence élevée,
- le signal temporel de données (Td), constitué par des séquences de durées variables de 32 impulsions ($n/_p = 2^7/_4$) séquence correspondant à chaque pas d'incrémentation,
- le signal numérique binaire (Nv) obtenu par incrémentation à chaque impulsion de (Td), jusqu'à la valeur n-1 ($2^7$-1 en l'exemple),
- le signal de chargement (Ch), obtenu par validation du comptage pour les valeurs 0, 32, 64 et 96 afin de fournir, au cours d'un cycle de comptage, 4 impulsions de chargement définissant les 4 pas d'incrémentation,
- le signal numérique transcodé (Nt) donnant en numérique pour chaque valeur de comptage du signal (Nv), le niveau de sinusoïde correspondant (32 niveaux pour chaque pas),
- enfin le signal analogique périodique (Sa) traduisant en niveaux analogiques discrets le signal numérique transcodé (Nt).

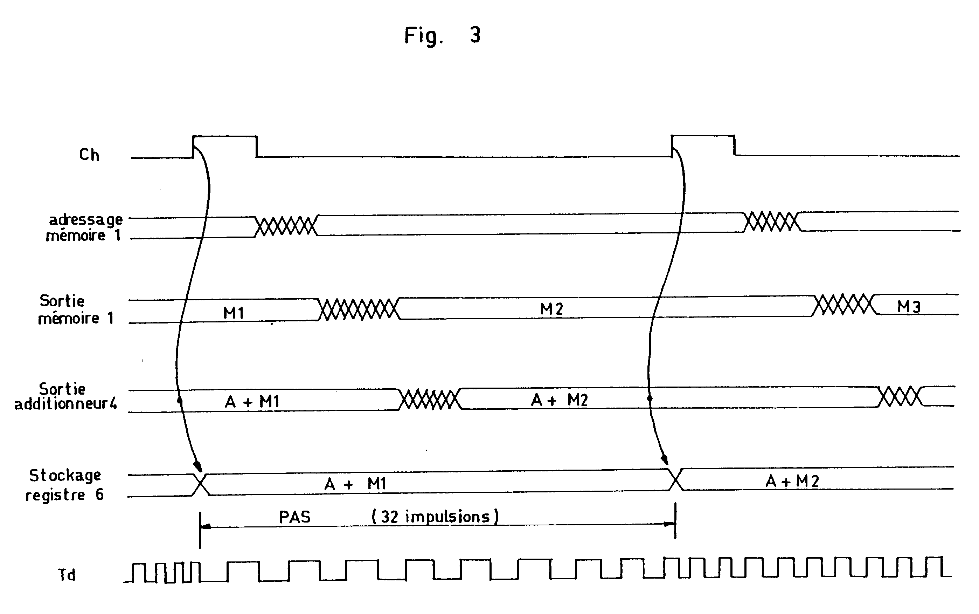

Pour illustrer la prise en compte séquentielle de chaque mot en vue de la génération du signal (Td), le chronogramme de la figure 3 symbolise successivement :

- le signal de chargement (Ch),
- le signal d'adressage issu des moyens d'adressage 2, qui porte une adresse nouvelle après chaque impulsion du signal de chargement,
- la succession des mots délivrés vers l'additionneur 4,
- la succession des paramètres (A + M) en sortie de l'additionneur 4,
- la succession des paramètres (A + M) chargés et stockés dans le registre 6,
- le signal temporel de données (Td) engendré à partir du contenu du registre 6.

Par ailleurs, les moyens d'adaptation représentés à titre d'exemple à la figure 4 comprennent un transformateur d'adaptation de ligne 14 qui reçoit le signal analogique transmis (Sa) et une composante continue (Cc) délivrée par un convertisseur numérique/analogique 15. Ce convertisseur est commandé par des moyens de calcul, composés en l'exemple d'un double comparateur 16, de deux compteurs 17 pourvus de registres de stockage du résultat, et d'opérateurs logiques de calcul 18.

Le double comparateur 16 reçoit un signal numérique (Ne) qui est élaboré, comme on le verra plus loin, dans l'ensemble de décodage. Il compare ce signal numérique à deux valeurs références (minimum et maximum admissible du signal, par exemple 0 et 255 dans le cas d'une conversion d'amplitude $2^8$ niveaux comme on le verra plus loin).

Chaque compteur 17 qui reçoit un signal d'horloge, dit second signal de référence de temps $H_2$, fourni par une horloge 19 de l'ensemble de décodage, compte, à la fréquence horloge, le nombre de valeurs minimale (0) ou maximale (255) dans chaque période fournie par un séquenceur 20 faisant partie de l'ensemble de décodage. Le poids des valeurs minimale B ou maximale H est stocké dans le registre du compteur considéré 17 pour être délivré séquentiellement vers les opérateurs logiques de calcul 18.

Ces opérateurs calculent une donnée numérique $D_c$ de composante continue à partir des poids des valeurs minimale B ou maximale H (par soustraction B-H) de façon à ramener ces poids à 0 en boucle fermée.

Cette composante numérique est délivrée vers le convertisseur 15 qui la convertit en une composante continue (Cc) ajoutée au signal issu du secondaire du transformateur 14 (lequel reçoit le signal analogique (Sa) sur son primaire). On obtient ainsi un signal analogique décalé (S'a) gardant toujours le même signe.

Ce signal (S'a) est délivré vers un amplificateur à gain variable 21 qui reçoit un signal de réglage de gain (Rg) délivré par un convertisseur numérique analogique 22. Ce convertisseur 22 est commandé par les moyens de calcul 16, 17, 18 déjà évoqués. Les opérateurs logiques de calcul 18 de ces moyens sont adaptés pour calculer une donnée numérique de gain $D_g$, en soustrayant à une constante prédéterminée J la somme des poids des valeurs minimale et maximale : J - (B + H). La constante J est choisie en fonction de l'amplitude maximale sur laquelle la conversion du signal analogique (S''a) sera ensuite à effectuer.

Le signal numérique de réglage de gain issu des opérateurs 18 est délivré vers le convertisseur 22 qui le convertit en signal de réglage de gain analogique (Rg).

Grâce à la boucle fermée décrite ci-dessus qui assure un réglage de la composante continue (Cc) et un réglage du gain (Rg) de l'amplificateur 21, ce dernier délivre un signal analogique amplifié (S''a) toujours de même signe, d'amplitude prédéterminée.

Ce signal analogique amplifié (S''a) est délivré vers l'ensemble de décodage représenté à la figure 5 et décrit ci-après.

Cet ensemble de décodage comprend un convertisseur analogique/numérique 23 qui reçoit le signal analogique amplifié (S''a), le second signal de référence de temps ($H_2$) issu de l'horloge 19 précitée et un signal de référence engendré par une source continue calibrée 24. Ce signal de référence est ajusté de sorte que le convertisseur 23 présente une plage de conversion égale à l'amplitude maximum précitée (fonction de la constante J).

Le convertisseur 23 délivre le signal numérique (Ne) déjà évoqué ; les divers moyens qui sont décrits ci-après visent à réaliser un découpage dudit signal numérique en p fractions de période (correspondant à celles du codage) et une analyse desdites fractions au moyen de la fonction de transfert inverse pour en déduire les données numériques M.

Le signal numérique (Ne) est en premier lieu distribué vers des opérateurs logiques comprenant un comparateur d'extraction de maximum 25, un comparateur d'extraction de minimum 26 et un soustracteur 27 agencé pour effectuer la différence des signaux issus des comparateurs 25 et 26 ; ce signal de différence (MAX-MIN) et le signal de minimum (MIN) qui sont utilisés comme on le verra plus loin, sont désignés par "données d'amplitude" $(D_A)$.

L'ensemble de décodage comprend en outre des moyens de mémorisation 28 contenant pour chacun des p pas d'incrémentation précités au moins deux seuils de la fonction sinusoïdale de transfert pour une amplitude normalisée de celle-ci (seuils normalisés) ; d'autres moyens de mémorisation 37 contiennent les écarts temporels entre lesdits seuils normalisés rapportés à la période de la fonction de transfert (dits écarts normalisés).

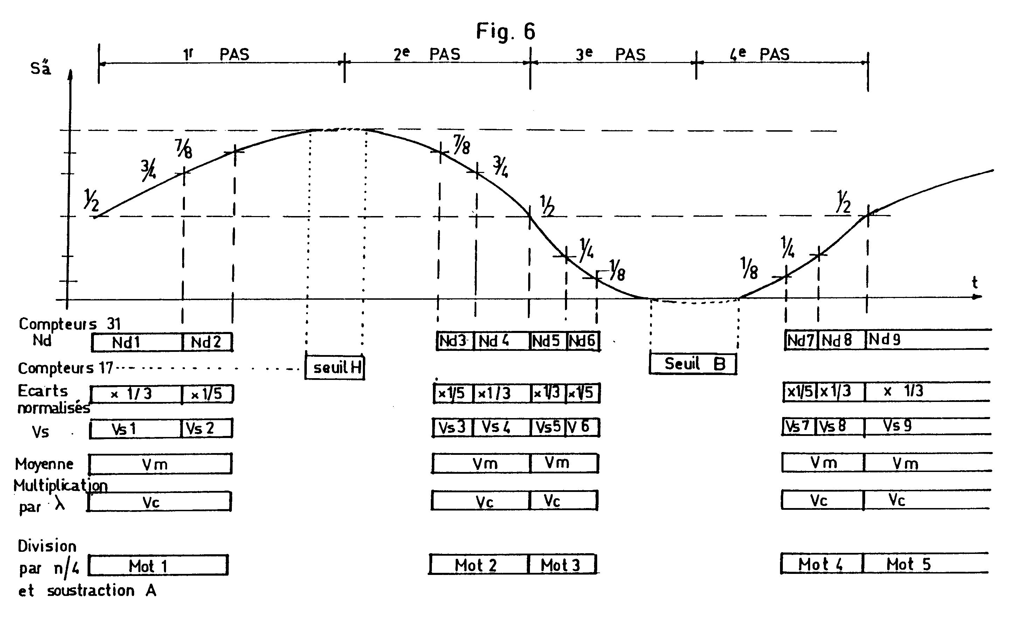

Dans l'exemple précité d'une fonction sinusoïdale de transfert dont la période est divisée en quatre pas d'incrémentation égaux, il est avantageux de choisir trois seuils normalisés par pas (définissant donc entre eux deux écarts normalisés), comme illustré à la figure 6 :

- pour le 1er pas : seuils normalisés $1/2$, $3/4$, $7/8$ avec les écarts normalisés correspondants $1/3$ et $1/5$,
- pour le 2ème pas : seuils normalisés $7/8$, $3/4$, $1/2$ avec les écarts normalisés $1/5$ et $1/3$,
- pour le 3ème pas : seuils normalisés $1/2$, $1/4$, $1/8$ avec les écarts normalisés $1/3$ et $1/5$,
- et pour le 4ème pas : seuils normalisés $1/8$, $1/4$, $1/2$ avec les écarts normalisés $1/5$ et $1/3$.

Il est à noter que la valeur particulière de ces écarts normalisés, commodes ensuite pour les calculs, provient des caractéristiques de la fonction sinusoïdale (l'écart $1/5$ étant approché à $3/1000$ près).

Les valeurs des seuils normalisés contenus dans les moyens de mémorisation 28 sont délivrées vers un multiplicateur 29 qui reçoit également la donnée d'amplitude MAX-MIN et effectue la multiplication entre cette donnée et chaque seuil normalisé ; le résultat est délivré vers un additionneur 44 qui reçoit la donnée d'amplitude MIN en vue de la soustraire audit résultat et de délivrer des seuils de travail. Cette multiplication et cette addition reviennent à effectuer une homothétie et une translation sur les seuils normalisés de façon à faire coïncider le minimum et le maximum de la fonction sinusoïdale de transfert, respectivement avec les bornes minimale et maximale du signal numérique (Ne).

Il est à noter que par "moyens de mémorisation 28" et "moyens de mémorisation 37", on entend aussi bien des mémoires aptes à stocker les valeurs des seuils normalisés et des écarts normalisés, que des circuits cablés capables de les reconstituer, ces circuits étant de préférence associés avec ceux du multiplicateur 29 ou ceux du diviseur 32 décrit plus loin, pour opérer directement les multiplications par les seuils normalisés $1/2$, $3/4$, $7/8$ ou les divisions par les écarts normalisés $1/3$, $1/5$. (Ces opérations correspondent, en pratique, à des calculs cablés binaires très simples combinant des registres de décalage et additionneur).

Les seuils de travail issus de l'additionneur 44 sont délivrés vers plusieurs comparateurs 30 qui reçoivent le signal numérique (Ne) et le valident entre lesdits seuils de travail pour délivrer un signal numérique validé (Na).

Par exemple dans le cas précité où il existe cinq seuils normalisés ($1/8$, $1/4$, $1/2$, $3/4$, $7/8$), quatre double comparateurs seront prévus pour effectuer la comparaison du signal numérique (Ne) aux paires de seuils voisins ($1/8$, $1/4$), ($1/4$, $1/2$), ($1/2$, $3/4$),($3/4$, $7/8$).

Ces comparateurs délivrent le signal numérique validé (Na) lorsque la valeur numérique de signal (Ne) se trouve dans une des quatre plages ci-dessus.

Le signal numérique validé (Na) est délivré vers des compteurs 31 qui reçoivent le second signal de référence de temps $(H_2)$ et comptent le nombre d'impulsions de référence de celui-ci lorsque le signal validé (Na) est présent. Ces compteurs délivrent un signal numérique (Nd) à plusieurs valeurs de comptage représentatives des durées pendant lesquelles le signal numérique validé (Na) était présent.

Ce signal (Nd) est délivré vers des moyens de calcul comprenant, en série, un diviseur 32, un additionneur/diviseur 33, un multiplicateur 34, un diviseur 35 et un soustracteur 36.

Le diviseur 32 reçoit le signal numérique (Nd) et les écarts normalisés ($1/3$, $1/5$) et divise les valeurs de comptage du signal (Nd) par ces écarts normalisés. Ces écarts sont contenus dans les moyens de mémorisation 37 (au sens large, c'est-à-dire mémoire de stockage ou circuit cablé associé au diviseur pour opérer directement l'opération).

Le diviseur 32 engendre une succession de valeurs $(V_S)$ représentant les valeurs de comptage de (Nd), chacune rapportée à la période de la fonction périodique de transfert.

L'additionneur/diviseur 33 opère, pour chaque pas, la moyenne des valeurs $(V_S)$ correspondant au pas considéré (moyenne des valeurs deux à deux en l'exemple précité) en vue d'engendrer un signal numérique (Nm) à p valeurs moyennes (Vm) (4 dans l'exemple précité).

La fréquence (F') de l'horloge 19 sera généralement inférieure à celle (F) de l'horloge de codage 8, en raison d'impératifs technologiques ; une fréquence de l'ordre de 30 mégahertz pourra être choisie en pratique pour (F′) avec un coefficient $\lambda = \dfrac{F}{F'} = 2$.

Le multiplicateur 34 multiplie chaque valeur moyenne (Vm) issu du diviseur/additionneur 33 par ce coefficient $\lambda$ mémorisé dans un registre auxiliaire 38 pour délivrer des valeurs corrigées (Vc).

Le diviseur 35 reçoit ces valeurs corrigées et un paramètre fonction du modulo de comptage -n- (ce paramètre égal à $n/_p$ est mémorisé dans un registre auxiliaire 39). Le diviseur 35 divise lesdites valeurs corrigées (Ve) par ce paramètre en vue d'obtenir une succession de résultats (A + $M_1$, A + $M_2$...). Dans l'exemple précité où la période est divisée en 4 pas d'incrémentation, le paramètre de la division est $\dfrac{n}{4}$.

Le soustracteur 36 reçoit la succession de résultats issus du diviseur 35 et la constante A mémorisée dans un registre auxiliaire 40. Il retranche cette constante et délivre un résultat constitué par la succession des mots ($M_1$, $M_2$...).

Un registre de sortie 41 mémorise provisoirement les mots et les délivre vers une mémoire de sortie 42 qui est associée à des moyens d'adressage 43 commandés par le séquenceur 20, de façon à écrire chaque mot à une adresse déterminée. Le séquencement s'effectue à la fréquence du signal validé (Na).

Le chronogramme de la figure 6 illustre les étapes essentielles du procédé qui est mis en oeuvre dans l'ensemble de décodage ci-dessus décrit et symbolise l'allure des principaux signaux ou données élaborés, à savoir :
- le signal analogique amplifié (S″a) (on a porté sur ce signal les seuils de travail après mise à l'échelle),
- le signal numérique (Nd) issu des compteurs 31,
- les poids des valeurs minimale B et maximale H issues des compteurs 17,
- les écarts normalisés mémorisés (ou cablés) dans les moyens de mémorisation 38,
- les valeurs ($V_S$) issues du diviseur 32,
- les valeurs moyennes (Vm) issues du diviseur/additionneur 33,
- les valeurs corrigées issues du multiplicateur 34,
- et les mots issus du soustracteur 36 après passage dans le diviseur 35.

L'ensemble de codage, les moyens d'adaptation et l'ensemble de décodage comprennent des composants en eux-mêmes classiques, qui peuvent être intégrés dans un seul circuit de type "VLSI".

**Revendications**

1. Procédé de transmission de données numériques (M) se présentant sous la forme d'une succession de mots ($M_1$,$M_2$,$M_3$...) en vue de permettre un débit de transmission élevé pour une bande de fréquences de transmission déterminée, dans lequel (a) dans une phase de codage, les données sont converties en un signal analogique périodique élaboré à partir des données numériques en engendrant à partir desdites données et d'une fréquence de référence (F) un signal numérique (Nv) de fréquence fonction desdites données dans une base de temps liée à la fréquence de référence (F), de façon que chaque période dudit signal numérique soit composée de p fractions de période, chacune fonction d'un mot ($M_1$,$M_2$...) des données, en opérant sur ledit signal numérique (Nv) une fonction de transfert périodique de forme prédéterminée, notamment sinusoïdale, de façon à engendrer un signal numérique transcodé (Nt) représentatif du signal précédent (Nv) et ayant une répartition périodique liée à ladite fonction de transfert, et en effectuant une conversion numérique/analogique dudit signal transcodé (Nt), (b) ledit signal analogique est transmis et (c) dans une phase de décodage, ledit signal est converti en un signal numérique représentatif des données (M) élaboré à partir du signal analogique transmis, en convertissant ce dernier en un signal numérique (Ne) par un échantillonage à une seconde fréquence de référence (F′) liée à la première (F), en élaborant à partir de ce signal numérique (Ne) et de la fonction de transfert, des seuils de travail délimitant dans ledit signal numérique p fractions de période correspondant à celles du codage, en analysant le signal numérique (Ne) entre lesdits seuils de travail dans une base de temps correspondant à la fréquence de référence (F′), de façon à engendrer un signal numérique (Nd) représentatif des durées entre seuils de travail, et en calculant à partir de ce signal numérique (Nd) la succession de mots ($M_1$,$M_2$...) des données, caractérisé en ce que ledit nombre p de fractions de période est supérieur à 2.

2. Procédé de transmission de données numériques (M) se présentant sous la forme d'une succession de mots ($M_1$, $M_2$, $M_3$...), en vue de permettre un débit de transmission élevé pour une bande de fréquences de transmission déterminée, ledit dispositif étant caractérisé en ce qu'il consiste :
   a) dans une phase de codage,
   . à engendrer un premier signal électrique de référence de temps ($H_1$), comprenant des impulsions de référence à fréquence élevée (F),

. à charger successivement un paramètre (A + M) fonction de chaque mot ($M_1$, $M_2$...) dans un registre de stockage sur commande d'un signal de chargement (Ch) composé d'une succession d'impulsions de chargement,

. à diviser le signal de référence ($H_1$) par le paramètre (A + M) contenu dans le registre de stockage pour délivrer un signal temporel de données (Td) ayant une fréquence ($F/_{A+M}$) variant de façon discrète en fonction inverse de la succession de mots ($F/_{A+M1}$, $F/_{A+M2}$...),

. à effectuer un comptage modulo n du signal temporel de données (Td) en vue de délivrer un signal numérique (Nv) constitué par les valeurs de comptage, n étant un nombre entier choisi en fonction d'une fidélité de transmission désirée,

. à effectuer une combinaison linéaire dudit signal numérique (Nv) de façon à valider ce signal en pas à pas, au moyen de pas d'incrémentation (P) en nombre égal à p, p étant supérieur à 2 et égal ou inférieur à n, de durées $d_1$, $d_2$... $d_i$... $d_p$, en vue d'engendrer le signal de chargement (Ch) précité comprenant une impulsion de chargement à la fin de chaque pas (P),

. à opérer une fonction de transfert périodique à fréquence $\dfrac{F}{n.(A + M)}$ sur le signal numérique (Nv), de façon à délivrer un signal numérique transcodé (Nt) représentatif des niveaux de la fonction de transfert pour les valeurs du signal numérique (Nv),

. à convertir le signal numérique transcodé (Nt) en un signal analogique (Sa), d'amplitude maximum calibré, en vue de délivrer un signal analogique périodique ayant pour enveloppe la fonction de transfert précitée et dont chaque période est composée de p fractions de période, chacune fonction d'un mot ($M_1$, $M_2$...),

b) à transmettre ce signal analogique (Sa) et à le recevoir avec une adaptation appropriée (S"a),

c) dans une phase de décodage :

. à engendrer un second signal électrique de référence de temps ($H_2$), de fréquence (F') liée à la fréquence (F) du premier signal de référence ($H_1$) dans un rapport constant λ = $F/_{F'}$,

. à convertir le signal analogique adapté (S"a), avec une fréquence d'échantillonnage F', en un signal numérique (Ne) image du signal numérique transcodé (Nt),

. à extraire et mémoriser les bornes minimale et maximale (MIN, MAX) dudit signal numérique (Ne), en vue d'engendrer des données caractérisant le signal (Ne), dites données d'amplitude ($D_A$),

. à mémoriser pour chacun des p pas d'incrémentation précités, d'une part, au moins deux seuils de la fonction périodique de transfert pour une amplitude normalisée de celle-ci, d'autre part, les écarts temporels entre lesdits seuils rapportés à la période de la fonction de transfert, lesdits seuils étant désignés par "seuils normalisés" et lesdits écarts par "écarts normalisés",

. à effectuer une remise à l'échelle desdits seuils normalisés en fonction des données d'amplitude ($D_A$), en vue d'obtenir des valeurs de seuil décalées en fonction desdites données d'amplitude, dits seuils de travail,

. à comparer le signal numérique (Ne) aux seuils de travail en vue d'engendrer un signal numérique (Na) validé pendant les durées entre seuils de travail,

. à compter le nombre d'impulsions de référence du second signal de référence ($H_2$) en présence du signal numérique validé (Na), de façon à engendrer un signal numérique (Nd) à plusieurs valeurs de comptage représentatives des durées pendant lesquelles le signal numérique validé (Na) est présent,

. à diviser chaque valeur du signal numérique (Nd) précité par l'écart normalisé correspondant, en vue d'engendrer une succession de valeurs (Vs), chacune rapportée à la période de la fonction périodique de transfert,

. pour chaque pas d'incrémentation (P), à opérer, le cas échéant, la moyenne desdites valeurs (Vs) en vue d'engendrer un signal numérique (Nm) à p valeurs moyennes (Vm) fonction de la succession des mots ($M_1$, $M_2$...),

. dans le cas où F' est différent de F, à multiplier chacune desdites p valeurs moyennes par le coefficient λ en vue d'obtenir une succession de p valeurs corrigées (Vc),

. à diviser chaque valeur corrigée (Vc) précitée par un paramètre fonction du modulo n en vue d'obtenir une succession de résultats (A + $M_1$, A + $M_2$...) et à

déduire la succession de mots ($M_1$, $M_2$...) constituant les données numériques.

3. Procédé de transmission selon la revendication 2, caractérisé en ce que (a) dans la phase de codage :
   - on effectue, pour engendrer le signal de chargement (Ch), une combinaison linéaire du signal numérique (Nv) en validant ce signal sur quatre pas d'incrémentation (P) de même durée,
   - on opère sur ledit signal numérique (Nv) une fonction de transfert sinusoïdale , considérée sur une période de façon que chaque quart de période de ladite fonction corresponde à un pas d'incrémentation (P), les valeurs de comptage dudit signal numérique (Nv) étant transformée en niveaux de sinusoïde répartis sur une période pour constituer le signal numérique transcodé (Nt).

4. Procédé de transmission selon la revendication 3, caractérisé en ce que (a) dans la phase de codage, l'on effectue un comptage binaire modulo $n = 2^b$ du signal temporel de données (Td), où $b \geqq 6$, de façon à délivrer un signal numérique binaire (Nv) à b bits de poids croissants.

5. Procédé de transmission selon la revendication 4, caractérisé en ce que (a) dans la phase de codage :
   - on mémorise préalablement sous forme d'une table la fonction sinusoïdale de transfert, ladite table comprenant des données représentatives des valeurs modulo n de ladite fonction à des adresses prédéterminées,
   - on réalise la fonction de transfert en adressant successivement ladite table au moyen des valeurs de comptage binaire du signal numérique (Nv) et en extrayant simultanément les données correspondantes contenues dans la table.

6. Procédé de transmission selon l'une des revendications 2, 3, 4 ou 5, caractérisé en ce que (a) dans la phase de codage :
   - l'on mémorise préalablement, dans une mémoire, la succession des mots ($M_1$, $M_2$...) à transmettre,
   - l'on adresse ladite mémoire en vue de sélectionner successivement chaque mot, par une activation assurée par le signal de chargement (Ch),
   - l'on charge dans le registre de stockage le paramètre (A + M) fonction du mot ainsi adressé, sur commande du signal de chargement (Ch).

7. Procédé de transmission selon la revendication 6, caractérisé en ce que (a) dans la phase de codage :
   - avant chaque division du signal de référence ($H_1$), l'on calcule le paramètre (A + M) en additionnant le mot adressé ($M_1$, $M_2$...) à une constante (A),
   - l'on charge ce paramètre dans le registre de stockage sur commande du signal de chargement (Ch) en vue d'opérer la division du signal de référence ($H_1$).

8. Procédé de transmission selon l'une des revendications précédentes, caractérisé en ce que (a) dans la phase de codage :
   - l'on engendre préalablement un signal de calibrage (Ref) ajustable sur commande externe,
   - l'on convertit le signal numérique transcodé (Nt) en signal analogique (Sa) en utilisant ce signal de calibrage comme référence d'amplitude.

9. Procédé de transmission selon l'une des revendications précédentes, caractérisé en ce que (b) le signal analogique (Sa) est adapté à sa réception en lui ajoutant une composante continue telle que le signal résultant, dit signal analogique décalé, (S'a) garde toujours le même signe.

10. Procédé de transmission selon la revendication 9, caractérisé en ce que :
    - (b) le signal analogique décalé (S'a) est amplifié avec un gain variable réglé séquentiellement de façon à délivrer un signal analogique amplifié (S"a) s'étendant sur une amplitude maximale prédéterminée,
    - (c) dans la phase de décodage, la conversion est réalisée sur ce signal analogique amplifié (S"a) par un convertisseur analogique/numérique ayant une plage de conversion égale à l'amplitude maximale précitée.

11. Procédé de transmission selon la revendication 3, caractérisé en ce que (c) dans la phase de décodage, on mémorise pour la fonction sinusoïdale de transfert les seuils normalisés suivants : seuil 1/2, seuil 3/4, seuil 7/8 avec les écarts normalisés relatifs 1/3 et 1/5 pour le premier pas d'incrémentation ; seuil 7/8, seuil 3/4, seuil 1/2 avec les écarts normalisés relatifs 1/5 et 1/3 pour le deuxième pas d'incrémentation ; seuil 1/2, seuil 1/4, seuil 1/8 avec les écarts normalisés relatifs 1/3 et 1/5 pour le troisième pas d'incrémentation ;

et seuil 1/8, seuil 1/4, seuil 1/2 avec les écarts normalisés relatifs 1/5 et 1/3 pour le quatrième pas d'incrémentation.

12. Procédé de transmission selon les revendications 2 et 10 prises ensemble, caractérisé en ce que (c) dans la phase de décodage, l'on effectue la remise à l'échelle des seuils normalisés en réalisant des opérations de translation et d'homothétie sur les seuils normalisés mémorisés de façon à faire coïncider le minimum et le maximum de la fonction sinusoïdale de transfert, respectivement avec les bornes minimale et maximale du signal numérique ($N_e$).

13. Procédé de transmission selon les revendications 11 et 12 prises ensemble, caractérisé en ce que (c) dans la phase de décodage, la remise à l'échelle est réalisée en calculant la différence des borne minimale (MIN) et borne maximale (MAX) du signal numérique ($N_e$), en multipliant chaque seuil normalisé par cette différence et en additionnant au résultat ladite borne minimale (MIN) pour obtenir le seuil de travail correspondant.

14. Procédé de transmission selon la revendication 11, caractérisé en ce que (c) dans la phase de décodage :
   - l'on divise les valeurs de comptage du signal numérique (Nd) par les écarts normalisés suivants : 1/3 et 1/5,
   - l'on opère la moyenne deux à deux des valeurs obtenues (Vs) en vue d'engendrer le signal numérique (Nm) à quatre valeurs moyennes (Vm) sur une période.

15. Procédé de transmission selon la revendication 7, caractérisé en ce que (c) dans la phase de décodage, l'on déduit la succession de mots, en soustrayant la constante (A) à la succession de paramètres calculés.

16. Procédé de transmission selon les revendications 13, 14 et 15 prises ensemble, caractérisé en ce que (c) dans la phase de décodage, l'opération de remise à l'échelle, l'opération de comptage, l'opération de division par l'écart normalisé, l'opération de calcul de moyenne, l'opération de multiplication par le coefficient $\lambda$, l'opération de division par la valeur corrigée (Vc) et l'opération de soustraction de la constante (A) sont effectuées successivement en temps réel en flot de données pour délivrer un signal numérique représentatif de la succession des mots ($M_1$, $M_2$...), ledit signal numérique étant ensuite mémorisé.

17. Procédé conforme à l'une des revendications précédentes, pour transmettre des données numériques (M) représentatives d'une image, dans lesquelles chaque mot ($M_1$, $M_2$...) représente le niveau de gris d'un point parmi un nombre G de niveaux de gris discrets, caractérisé en ce que chaque paramètre (A + M) est calculé en additionnant le mot correspondant à une constante (A) comprise entre 2 G et 3,5 G.

18. Dispositif de transmission de données numériques (M) se présentant sous la forme d'une succession de mots ($M_1$,$M_2$,$M_3$...) pour la mise en oeuvre du procédé conforme à l'une des revendications précédentes, comprenant un ensemble de codage pour convertir les données en un signal analogique (Sa) représentatif de celles-ci, des moyens de transmission et d'adaptation du signal analogique et un ensemble de décodage en vue de reconstituer lesdites données numériques,
ledit dispositif étant caractérisé en ce que :
   (a) l'ensemble de codage comprend une horloge (8) de fréquence (F), des moyens (1-10) de génération du signal numérique (Nv), de fréquence fonction de (F) et des mots des données (M) tel que chaque période dudit signal numérique soit composée d'un nombre p supérieur à 2 de fractions de période, chacune fonction d'un mot ($M_1$,$M_2$...) des données, un transcodeur périodique (11), et un convertisseur numérique/analogique (12),
   (c) l'ensemble de décodage comprend une horloge (19) de fréquence (F') liée à la fréquence (F), un convertisseur analogique/numérique (23) séquencé par l'horloge (8) pour délivrer le signal numérique (Ne), des moyens (25-29, 44) de génération des seuils de travail à partir de ce signal (Ne), des moyens (30, 31) d'analyse dudit signal numérique (Ne) entre lesdits seuils de travail, et des moyens de calcul de la succession de mots (32-40).

19. Dispositif de transmission de données numériques (M) pour la mise en oeuvre du procédé conforme à l'une des revendications 2 à 7, comprenant un ensemble de codage pour convertir les données en un signal analogique (Sa) représentatif de celles-ci, des moyens de transmission et d'adaptation du signal analogique et un ensemble de décodage en vue de reconstituer lesdites données numériques,
ledit dispositif étant caractérisé en ce que :
   (a) l'ensemble de codage comprend une horloge (8) pour engendrer un premier signal électrique de référence de temps ($H_1$), un registre de stockage (6) commandé par un signal de chargement (Ch) en vue de charger successivement des paramètres (A + M) fonction des données numériques, un diviseur programmable (7) agencé pour recevoir le premier signal de référence de temps (H₁) et les paramètres (A + M) issues du registre (6) en vue de délivrer un signal temporel de données (Td), un compteur modulo n (9) agencé pour recevoir ledit signal temporel de données (Td) en vue de délivrer un signal numérique (Nv), un opérateur linéaire logique (10) agencé pour recevoir le signal numérique (Nv) en vue de valider ce signal en pas à pas avec un nombre de pas égal à p, p étant supérieur à 2 et égal ou inférieur à n, par période dudit signal numérique et d'engendrer le signal de chargement (Ch), un transcodeur périodique (11) agencé pour recevoir le signal numérique (Nv) en vue de délivrer un signal numérique transcodé (Nt) représentatif des niveaux d'une fonction de transfert pour les valeurs dudit signal numérique, et un convertisseur numérique/analogique (12) agencé pour recevoir le signal numérique transcodé (Nt) et un signal de calibrage (Ref) en vue de délivrer le signal analogique (Sa),

(c) l'ensemble de décodage comprend une horloge (19) pour engendrer un second signal électrique de référence de temps (H₂), un convertisseur analogique/numérique (23) agencé pour recevoir le signal analogique transmis (S″a) et le second signal de référence de temps (H₂) en vue de délivrer un signal numérique (Ne) à partir dudit signal analogique, des opérateurs logiques (25, 26, 27) agencés pour recevoir le signal numérique (Ne) en vue de délivrer des données d'amplitude (D_A), des moyens (28) de mémorisation de seuils normalisés de la fonction périodique de transfert, des moyens (37) de mémorisation des écarts normalisés correspondants de ladite fonction périodique de transfert, des opérateurs logiques (29, 44) agencés pour recevoir des seuils normalisés issus des moyens de mémorisation (28) et les données d'amplitude (D_A) en vue de délivrer des seuils de travail, des comparateurs (30) agencés pour recevoir les seuils de travail et le signe numérique (Ne) en vue de valider ledit signal numérique pendant les durées entre seuils de travail, des compteurs (31) recevant le signal numérique validé (Na) et le second signal de référence de temps (H₂) en vue de délivrer un signal numérique (Nd) à valeurs représentatives des durées entre seuils de travail, des moyens de calcul (32-36) agencés pour recevoir le signal numérique (Nd), les écarts normalisés issus des moyens de mémorisation (37), éventuellement une valeur (A) correspondant au paramétrage (A + M), éventuellement un coefficient (λ), et le second signal de référence de temps (H₂) en vue d'effectuer séquentiellement des opérations de calcul pour délivrer la succession des mots constituant les données numériques.

20. Dispositif selon la revendication 19, caractérisé en ce que (a) le transcodeur périodique (11) comprend une mémoire contenant des données représentatives des valeurs, modulo n, de la fonction périodique de transfert, le compteur modulo n (9) étant relié à ladite mémoire en vue de son adressage séquentiel.

21. Dispositif selon l'une des revendications 19 ou 20, caractérisé en ce qu'il comprend (a) un registre (5) de stockage de la constante (A) et un additionneur (4) agencé pour recevoir les données numériques (M) et ladite constante (A) et adapté pour délivrer vers le registre de stockage (6) les paramètres (A + M).

22. Dispositif selon l'une des revendications 19, 20 ou 21, caractérisé en ce qu'il comprend (a) une mémoire (1) de stockage préalable des données numériques (M) et des moyens (2) d'adressage de ladite mémoire commandés par le signal de chargement (Ch) en vue de délivrer les données à chaque pas de chargement.

23. Dispositif selon l'une des revendications 19, 20, 21 ou 22 pour transmettre des données numériques (M) représentatives d'une image, caractérisé en ce qu'il comprend un transcodeur d'égalisation d'histogramme (3) agencé pour recevoir les données numériques et adapté pour délivrer des données numériques corrigées ayant un spectre réparti sur l'ensemble des niveaux possibles des données (M).

24. Dispositif selon l'une des revendications 19, 20, 21, 22 ou 23, caractérisé en ce qu'il comprend (b) un transformateur d'adaptation de ligne (14) recevant le signal analogique (Sa) et une composante continue (Cc) en vue de délivrer un signal analogique décalé (S'a) gardant toujours le même signe, et un amplificateur à gain variable (21) recevant ledit signal analogique décalé (S'a) et un signal de réglage du gain (Rg) en vue de délivrer un signal analogique amplifié (S″a) s'étendant sur une amplitude maximale prédéterminée.

25. Dispositif selon la revendication 24, caractérisé en ce que :
- le transformateur d'adaptation de ligne (14) est associé à un convertisseur numérique/analogique (15) commandé par des moyens de calcul (16, 17, 18) recevant le signal (Ne) en vue d'en extraire en boucle fermée une donnée numérique de composante continue (Dc),
- l'amplificateur à gain variable (21) est associé à un convertisseur numérique/analogique (22) commandé par des moyens de calcul (16, 17, 18) recevant le signal (Ne) en vue d'en extraire en boucle fermée une donnée numérique de gain (Dg).

26. Dispositif selon l'une des revendications 19, 20, 21, 22, 23, 24 ou 25, caractérisé en ce que (c) les opérations logiques adaptées pour délivrer les données d'amplitude $(D_A)$ comprennent un comparateur d'extraction de maximum (25), un comparateur d'extraction de minimum (26) et un soustracteur (27) agencé pour effectuer la différence des signaux issus des comparateurs.

27. Dispositif selon la revendication 26, caractérisé en ce que (c) les opérateurs logiques adaptés pour délivrer les seuils de travail comprennent un multiplicateur (29) relié au soustracteur (27) et aux moyens (28) de mémorisation des seuils normalisés, et un additionneur (44) relié audit multiplicateur (29) et au comparateur d'extraction du minimum (26).

28. Dispositif selon la revendication 21, caractérisé en ce que les moyens de calcul comprennent, en série, un diviseur (32) recevant le signal numérique (Nd) et les écarts normalisés, un additionneur/diviseur (33) agencé pour calculer sur chaque pas la moyenne (Vm) des valeurs (Vs) issues du diviseur (32), un multiplicateur (34) par le coefficient $(\lambda)$, un diviseur (35) des valeurs corrigées (Vc) issues du multiplicateur (34) par le paramètre fonction du modulo de comptage n, et un soustracteur (36) recevant la constante (A) en vue de la retrancher aux résultats (A + M) issus du diviseur (35).

29. Dispositif selon l'une des revendications 19 à 28, caractérisé en ce qu'il comprend une mémoire de sortie (42) pour le stockage des données calculées et des moyens (43) d'adressage de ladite mémoire commandés par un séquenceur (20) recevant le signal numérique validé (Na) issu des comparateurs (30) en vue d'assurer un séquencement à la fréquence de ce signal.

**Patentansprüche**

1. Verfahren zur Übertragung von digitalen Daten (M), die sich in Form einer Folge von Wörtern $(M_1,M_2,M_3...)$ darstellen, um eine erhöhte Übertragungsleistung für ein bestimmtes Übertragungsfrequenzband zu ermöglichen, in dem (a) in einer Kodierphase die Daten in ein periodisches Analogsignal konvertiert werden, das aus digitalen Daten erarbeitet ist, indem aus besagten Daten und einer Bezugsfrequenz (F) ein digitales Signal (Nv) einer Frequenz als Funktion besagter Daten in einer Basiszeit, die mit der Bezugsfrequenz (F) verbunden ist, derart erzeugt wird, daß jede Periode besagten Digitalsignals aus p Periodenfraktionen, jede eine Funktion eines Wortes $(M_1,M_2...)$ von Daten, zusammengesetzt ist, indem auf besagtes Digitalsignal (Nv) eine periodische Übertragungsfunktion vorbestimmter Form, insbesondere sinusförmig, derart einwirkt, daß ein codeumgesetztes, für das vorhergehende Signal (Nv) repräsentatives Digitalsignal (Nt) erzeugt wird, das eine periodische Aufteilung besitzt, die mit besagter Übertragungsfunktion verbunden ist, und indem eine Digital/Analog-Umwandlung besagten codeumgesetzten Signals (Nt) bewirkt wird, (b) besagtes Analogsignal übertragen und (c) in einer Dekodierphase besagtes Signal in ein Digitalsignal konvertiert wird, das repräsentativ für Daten (M) ist und aus dem übermittelten Analogsignal erarbeitet wird, indem letzteres in ein Digitalsignal (Ne) durch Probenahme bei einer zweiten Bezugsfrequenz (F'), die mit der ersten (F) verbunden ist, umgewandelt wird, indem aus diesem Digitalsignal (Ne) und der Übertragungsfunktion Arbeitsschwellwerte erarbeitet werden, die in besagtem Digitalsignal p Periodenfraktionen entsprechend denjenigen der Kodierung begrenzen, indem das Digitalsignal (Ne) zwischen besagten Arbeitsschwellwerten in einer Zeitbasis entsprechend der Bezugsfrequenz (F') derart analysiert wird, daß ein Digitalsignal (Nd) erzeugt wird, das für die Dauern zwischen den Arbeitsschwellwerten repräsentativ ist, und indem aus diesem Digitalsignal (Nd) die Folge von Wörtern $(M_1,M_2...)$ von Daten berechnet wird, dadurch gekennzeichnet, daß die besagte Zahl p von Periodenfraktionen größer als 2 ist.

2. Verfahren zur Übertragung von digitalen Daten (M), die sich in Form einer Folge von Wörtern $(M_1,M_2,M_3...)$ darstellen, um eine erhöhte Übertragungsleistung für ein bestimmtes Übertragungsfrequenzband zu ermöglichen, wobei besagtes Verfahren dadurch gekennzeichnet ist, daß es darin besteht, daß

   a) in einer Kodierphase

   ein erstes elektrisches Zeitbezugssignal $(H_1)$ erzeugt wird, das Bezugsimpulse erhöhter Frequenz (F) umfaßt,

   aufeinanderfolgend ein Parameter (A + M), Funktion jedes Wortes $(M_1,M_2...)$, in ein Speicherregister auf Befehl eines Ladesignals (Ch) zusammengesetzt aus einer Folge von Ladeimpulsen geladen wird,

   das Bezugsignal $(H_1)$ durch den Parameter (A + M), der in dem Speicherregister enthalten ist, geteilt wird, um ein temporäres Datensignal (Td) zu liefern, das eine Frequenz (F/(A+M)) besitzt, die in diskreter Weise als Inversfunktion der Folge von Worten (F/(A+M$_1$), F/(A+M$_2$) ...) variiert,

eine Zählung modulo n des temporären Datensignals (Td) vorgenommen wird, um ein Digitalsignal (Nv) zu liefern, das durch diese Zählwerte gebildet wird, wobei n eine ganze Zahl gewählt als Funktion einer gewünschten Übertragungsgüte ist,

eine lineare Kombination besagten Digitalsignals (Nv) so vorgenommen wird, daß dieses Signal Schritt für Schritt mittels eines Inkrementierungsschrittes (P) einer Anzahl gleich p von Dauern d$_1$, d$_2$, ..., d$_i$, ..., d$_p$, wobei p größer als 2 und gleich oder kleiner als n ist, für gültig erklärt wird, um das vorerwähnte Ladesignal (Ch) umfasssend einen Ladeimpuls am Ende jedes Schrittes (P) zu erzeugen,

eine zur Frequenz F/(n(A + M)) periodische Übertragungsfunktion auf das Digitalsignal (Nv) so einwirkt, daß ein codeumgesetztes Digitalsignal (Nt) abgegeben wird, das repräsentativ für Niveaus der Übertragungsfunktion für die Werte des Digitalsignals (Nv) ist,

das codeumgesetzte Digitalsignal (Nt) in ein Analogsignal (Sa) mit maximal kalibrierter Amplitude umgewandelt wird, um ein periodisches Analogsignal, das als Einhüllende die vorerwähnte Übertragungsfunktion besitzt und von dem jede Periode aus p Periodenfraktionen, jede eine Funktion eines Wortes (M$_1$, M$_2$...) zusammengesetzt ist, zu liefern,

b) dieses Analogsignal (Sa) mit einer geeigneten Adaption (S″a) übertragen und empfangen wird,

c) in einer Dekodierphase

ein zweites elektrisches Zeitbezugssignal (H$_2$) einer Frequenz (F′), die mit der Frequenz (F) des ersten Bezugssignals (H$_1$) über einen konstanten Bezug $\lambda = F/_{F′}$ verbunden ist, erzeugt wird,

das adaptierte Analogsignal (S″a) mit einer Probenahmefrequenz F′ in ein Digitalsignal (Ne), das ein Bild des codeumgesetzten Digitalsignals (Nt) ist, konvertiert wird,

die minimalen und maximalen Grenzen (MIN, MAX) besagten Digitalsignals (Ne) extrahiert und gespeichert werden, um Daten, bezeichnet als Amplitudendaten (D$_A$), die das Signal (Ne) charakterisieren, zu erzeugen,

für jeden p vorerwähnten Inkrementierungsschritt einerseits wenigstens zwei Schwellwerte der periodischen Übertragungsfunktion für eine normierte Amplitude hiervon und andererseits die temporären Abstände zwischen besagten Schwellwerten in Bezug auf die Periode der Übertragungsfunktion gespeichert werden, wobei die Schwellwerte als "nomierte Schwellwerte" und die Abstände als "normierte Abstände" bezeichnet werden,

eine Maßstabsübergabe besagter normierter Schwellwerte als Funktion von Amplitudendaten (D$_A$) bewirkt wird, um Schwellwerte zu erhalten, die als Funktion besagter Amplitudendaten versetzt sind und als Arbeitsschwellwerte bezeichnet werden,

das Digitalsignal (Ne) mit den Arbeitsschwellwerten verglichen wird, um ein Digitalsignal (Na) zu erzeugen, das während der Dauern zwischen Arbeitsschwellwerten gültig ist,

die Anzahl von Bezugsimpulsendes zweiten Bezugssignals (H$_2$) in Anwesenheit des gültigen Digitalsignals (Na) derart gezählt wird, daß ein Digitalsignal (Nd) mit mehreren Zählwerten, repräsentativ für die Dauern, während welcher das gültige Digitalsignal (Na) vorhanden ist, erzeugt wird,

jeder Wert des vorerwähnten Digitalsignals (Nd) durch den entsprechenden normierten Abstand geteilt wird, um eine Folge von Werten (Vs) zu erzeugen, von denen jeder zur Periode der periodischen Übertragunsgfunktion in Beziehung steht,

für jeden durchzuführenden Inkrementierungsschritt (P) gegebenenfalls der Mittelwert besagter Werte (Vs) gebildet wird, um ein Digitalsignal (Nm) mit p Mittelwerten (Vm) als Funktion der Folge von Worten (M$_1$, M$_2$,...) zu erzeugen,

in dem Fall, in dem F′ unterschiedlich zu F ist, jeder der besagten p Mittelwerte mit dem Koeffizienten $\lambda$ multipliziert wird, um eine Folge von p korrigierten Werten (Vc) zu erhalten,

jeder vorerwähnte korrigierte Wert (Vc) durch einen Parameter Funktion modulo n diviert wird, um eine Ergebnisfolge (A+M$_1$, A+M$_2$, ...) zu erhalten und die Folge von Worten (M$_1$, M$_2$, ...), die die Digitaldaten bilden, abzuleiten.

3. Verfahren zur Übertragung gemäß Anspruch 2, dadurch gekennzeichnet, daß man (a) in der Kodierphase

zur Erzeugung des Ladesignals (Ch) eine lineare Kombination des Digitalsignals (Nv) bewirkt, indem dieses Signal auf vier Inkrementierungsschritten (P) gleicher Dauer gültig gemacht wird,

auf besagtes Digitalsignal (Nv) eine sinusförmige Übertragungsfunktion, betrachtet in einer Periode derart, daß jedes Periodenviertel dieser Funktion einem Inkrementierungsschritt (p) entspricht, einwirken läßt, wobei die Zählwerte besagten Digitalsignals (Nv) auf Niveaus der Sinuskurve, verteilt auf eine Periode, transformiert werden, um das codeumgewandelte Digitalsignal (Nt) zu bilden.

4. Verfahren zur Übertragung gemäß Anspruch 3, dadurch gekennzeichnet, daß man (a) in der Kodierphase eine binäre Zählung modulo $n = 2^b$ des temporären Signals von Daten (Td), wobei $b \geqq 6$ ist, derart bewirkt, daß ein binäres Digitalsignal (Nv) mit b Bits mit wachsendem Gewicht erzeugt wird.

5. Verfahren zur Übertragung gemäß Anspruch 4, dadurch gekennzeichnet, daß man (a) in der Kodierphase
vorher in Form einer Tabelle die sinusförmige Übertragungsfunktion speichert, wobei besagte Tabelle Daten repräsentativ zu Werten modulo n besagter Funktion an vorbestimmten Adressen umfaßt,
die Übertragungsfunktion durch aufeinanderfolgendes Adressieren besagter Tabelle zu Mitteln von binären Zählwerten des Digitalsignals (Nv) und durch gleichzeitiges Entnehmen der in der Tabelle enthaltenen entsprechenden Daten realisiert.

6. Verfahren zur Übertragung gemäß einem der Ansprüche 2, 3, 4 oder 5, dadurch gekennzeichnet, daß man (a) in der Kodierphase
vorher in einem Speicher die Folge von zu übertragenden Worten (M₁, M₂...) speichert,
besagten Speicher adressiert, um aufeinanderfolgend jedes Wort durch eine Aktivierung, sichergestellt durch das Ladesignal (Ch), auszuwählen,
in das Speicherregister den Parameter (A + M), Funktion des so adressierten Wortes, auf Befehl des Ladesignals (Ch) lädt.

7. Verfahren zur Übertragung gemäß Anspruch 6, dadurch gekennzeichnet, daß man (a) in der Kodierphase
vor jeder Division des Bezugssignals (H₁) den Parameter (A + M) berechnet, indem man das adressierte Wort (M₁, M₂...) zu einer Konstanten (A) addiert,
diesen Parameter in das Speicherregister auf Befehl des Ladesignals (Ch) lädt, um die Division des Bezugssignals (H₁) durchzuführen.

8. Verfahren zur Übertragung gemäß einem der vorhergehenden Ansprüche, dadurch gekennzeichnet, daß man (a) in der Kodierphase
vorher ein Kalibriersignal (Ref), das auf äußeren Befehl einstellbar ist, erzeugt,
das codeumgewandelte Digitalsignal (Nt) in ein Analogsignal (Sa) konvertiert, indem dieses Kalibriersignal als Referenzamplitude verwendet wird.

9. Verfahren zur Übertragung gemäß einem der vorhergehenden Ansprüche, dadurch gekennzeichnet, daß (b) das Analogsignal (Sa) an seinem Empfang adaptiert wird, indem diesem eine kontinuierliche Komponente zugefügt wird, so daß das resultierende Signal (S'a), als verschobenes Analogsignal bezeichnet, immer das gleich Vorzeichen aufweist.

10. Verfahren zur Übertragung gemäß Anspruch 9, dadurch gekennzeichnet, daß
(b) das verschobene Analogsignal (S'a) mit einem variablen Verstärkungsfaktor verstärkt wird, der sequentiell derart geregelt wird, daß ein verstärktes Analogsignal (S"a) abgegeben wird, das sich über eine vorbestimmte maximale Amplitude erstreckt,
(c) in der Dekodierphase die Umwandlung dieses verstärkten Analogsignals (S"a) durch einen Analog/Digital-Wandler realisiert wird, der einen Umwandlungsbereich gleich der vererwähnten maximalen Amplitude besitzt.

11. Verfahren zur Übertragung gemäß Anspruch 3, dadurch gekennzeichnet, daß man (c) in der Dekodierphase für die sinusförmige Übertragungsfunktion die folgenden normierten Schwellwerte: Schwelle 1/2, Schwelle 3/4, Schwelle 7/8 mit den relativen normierten Abständen 1/3 und 1/5 für den ersten Inkrementierungsschritt; Schwelle 7/8, Schwelle 3/4, Schwelle 1/2 mit den relativen normierten Abständen 1/5 und 1/3 für den zweiten Inkrementierungsschritt; Schwelle 1/2, Schwelle 1/4, Schwelle 1/8 mit den relativen normierten Abständen 1/3 und 1/5 für den dritten Inkrementierungsschritt; Schwelle 1/8, Schwelle 1/4, Schwelle 1/2 mit den relativen normierten Abständen 1/5 und 1/3 für den vierten Inkrementierungsschritt speichert.

12. Verfahren zur Übertragung gemäß den Ansprüchen 2 und 10 gemeinsam genommen, dadurch gekennzeichnet, daß man (c) in der Dekodierphase die Maßstabsübergabe von normierten Schwellwerten vornimmt, indem man Translations- und homothetische Operationen bezüglich der gespeicherten normierten Schwellwerte derart vornimmt, daß das Minimum und das Maximum der sinusförmigen Übertragungsfunktion entsprechend mit den minimalen und maximalen Grenzen des Digitalsignals (Ne) übereinstimmen.

13. Verfahren zur Übertragung gemäß den Ansprüchen 11 und 12 gemeinsam genommen, dadurch gekennzeichnet, daß (c) in der Dekodierphase die Maßstabsübergabe dadurch realisiert wird, daß die Differenz der minimalen Grenze (MIN) und maximalen Grenze (MAX) des Digitalsignals (Ne) berechnet wird, indem jeder normierte Schwellwert mit dieser Differenz multipliziert und indem zum Resultat besagte minimale Grenze (MIN) addiert wird, um einen entsprechenden Arbeitsschwellwert zu erhalten.

14. Verfahren zur Übertragung gemäß Anspruch 11, dadurch gekennzeichnet, daß man (c) in der Dekodierphase

die Zählwerte des Digitalsignals (Nd) durch die folgenden normierten Abstände: 1/3 und 1/5 teilt,

die Mitte paarweise von erhaltenen Werten (Vs) bildet, um das numerische Signal (Nm) mit vier Mittelwerten (Vm) über einer Periode zu erhalten.

15. Verfahren zur Übertragung gemäß Anspruch 7, dadurch gekennzeichnet, daß man (c) in der Dekodierphase die Folge von Wörtern ableitet, indem die Konstante (A) von der Folge von berechneten Parametern abgezogen wird.

16. Verfahren zur Übertragung gemäß den Ansprüchen 13, 14 und 15 zusammen genommen, dadurch gekennzeichnet, daß (c) in der Dekodierphase der Vorgang der Maßstabsübertragung, der Vorgang des Zählens, der Vorgang des Teilens durch den normierten Abstand, der Vorgang des Mittelwertberechnens, der Vorgang der Multiplikation mit dem Koeffizienten λ, der Vorgang der Division durch den korrigierten Wert (Vc) und der Vorgang der Subtraktion der Konstanten (A) aufeinanderfolgend in Realzeit im Datenfluß vorgenommen werden, um ein Digitalsignal zu liefern, das für die Folge von Worten (M₁, M₂...) repräsentativ ist, wobei besagtes Digitalsignal dann gespeichert wird.

17. Verfahren gemäß einem der vorhergehenden Ansprüche zum Übertragen von Digitaldaten (M) repräsentativ für ein Bild, in denen jedes Wort (M₁, M₂...) das Grauniveau eines Punktes unter einer Anzahl G von diskreten Grauniveaus darstellt, dadurch gekennzeichnet, daß jeder Parameter (A + M) berechnet wird, indem das entsprechende Wort zu einer Konstanten (A) zwischen 2 G und 3,5 G addiert wird.

18. Vorrichtung zur Übertragung von digitalen Daten (M), die sich in Form einer Folge von Wörtern (M₁,M₂,M₃...) darstellen, zur Durchführung des Verfahrens gemäß einem der vorhergehenden Ansprüche, umfassend eine Kodiereinheit zum Umwandeln der Daten in ein für diese repräsentatives Analogsignal (5a), Mittel zum Übertragen und Adaptieren des Analogsignals und eine Dekodiereinheit zum Rekonstituieren besagter Digitaldaten, wobei besagte Vorrichtung dadurch gekennzeichnet ist, daß

(a) die Kodiereinheit eine Uhr (8) der Frequenz (F), Mittel (1-10) zur Erzeugung des numerischen Signals (Nv), der Frequenzfunktion von (F) und von Wörtern dieser Daten, so daß jede Periode besagten Digitalsignals aus einer Anzahl p größer als 2 von Periodefraktionen, jede Funktion eine Wortes (M₁, M₂,...) der Daten, zusammengesetzt ist, einen periodischen Codeumformer (11) und einen Digital/Analog-Wandler (12) umfaßt,

(c) die Dekodiereinheit eine Uhr (19) der Frequenz (F') verbunden mit der Frequenz (F), einen Analog/Digital-Wandler (23) sequentiert durch die Uhr (8) zum Abgeben des Digitalsignals (Ne), Mittel (25-29, 44) zur Erzeugung von Arbeitsschwellwerten aus diesem Signal (Ne), Mittel (30, 31) zur Analyse besagten Digitalsignals (Ne) zwischen besagten Arbeitsschwellwerten und Mittel zum Berechnen der Folge von Wörtern (32-40).

19. Vorrichtung zur Übertragung von digitalen Daten (M) zur Durchführung des Verfahrens gemäß einem der Ansprüche 2 bis 7, umfassend eine Kodiereinheit zum Umwandeln der Daten in ein für diese repräsentatives Analogsignal (5a), Mittel zum Übertragen und Adaptieren des Analogsignals und eine Dekodiereinheit zum Rekonstituieren besagter Digitaldaten, wobei besagte Vorrichtung dadurch gekennzeichnet ist, daß

(a) die Kodiereinheit eine Uhr (8) zum Erzeugen eines ersten elektrischen Zeitbezugssignals (H₁), ein Speicherregister (6), gesteuert durch ein Ladesignal (Ch), um aufeinanderfolgend Parameter (A + M), Funktion von Digitaldaten, zu laden, einen programmierbaren Diviseur (7), ausgebildet zum Empfangen des ersten Zeitbezugssignals (H₁) und der Parameter (A + M), abgegeben vom Register (6), um ein temporäres Datensignal (Td) zu liefern, einen Zähler modulo n (9), ausgebildet zum Empfangen besagten temporären Datensignals (Td), um ein Digitalsignal (Nv) zu liefern, einen logischen Linearoperator (10), ausgebildet zum Empfang des Digitalsignals (Nv), um dieses Signal Schritt für Schritt mit einer Schrittanzahl gleich p pro Periode besagten Digitalsignals, wobei p größer als 2 und gleich oder kleiner als n ist, gültig werden zu lassen und das Ladesignal (Ch) zu erzeugen, einen periodischen Codeumwandler (11), ausgebildet zum Empfangen des Digitalsignals (Nv), um ein codeumgewandeltes Digitalsignal (Nt) repräsentativ für Niveaus einer Übertragungsfunktion für die Werte besagten Digitalsignals zu liefern, und einen Digital/Anlalog-Wandler (12), ausgebildet zum Empfang des codeumgewandelten Digitalsignals (Nt) und eines Kalibriersignals (Ref), um das Analogsignal (Sa) zu liefern,

(c) die Dekodiereinheit eine Uhr (19) zum Erzeugen eines zweiten elektrischen Zeitbezugssignals (H₂), einen Analaog/Digital-Wandler (23), ausgebildet zum Empfang des übermittelten Analogsignals (S″a) und des zweiten Zeitbezugssignals (H₂), um ein Digitalsignal (Ne) aus besagtem Analogsignal zu liefern, logische Operatoren (25, 26, 27), ausgebildet zum Empfang des Digitalsignals (Ne), um Amplitudendaten (D$_A$) zu liefern, Mittel (28) zur Speicherung von normierten Schwellwerten der periodischen Übertragungsfunktion, logische Operatoren (29, 44), ausgebildet zum Empfang von von den Speichermitteln (28) ausgegebenen, normierten Schwellwerten und den Amplitudendaten (D$_A$), um Arbeitsschwellwerte zu liefern, Komparatoren (30), ausgebildet zum Empfang der Arbeitsschwellwerte und des Digitalsignals (Ne), um besagtes Digitalsignal während der Dauern zwischen Arbeitsschwellwerten zu validisieren, Zähler (31), die das validisierte Digitalsignal (Na) und das zweite Zeitbezugssignal (H₂) empfangen, um ein Digitalsignal (Nd) mit Werten repräsentativ für die Dauern zwischen Arbeitsschwellwerten zu liefern, Berechnungsmittel (32-36), ausgebildet zum Empfang des Digitalsignals (Nd), der normierten Abstände, ausgegeben von Speichermitteln (37), gegebenenfalls eines Wertes (A) entsprechend der Parametrierung (A + M), gegebenenfalls eines Koeffizienten (λ) und des zweiten Zeitbezugssignals (H₂), um sequentiell Rechenoperationen vorzunehmen, um die Folge von Wörtern, die die digitalen Daten bilden, zu liefern, umfaßt.

20. Vorrichtung gemäß Anspruch 19, dadurch gekennzeichnet, daß (a) der periodische Codeumwandler (11) einen Speicher umfaßt, der Daten repräsentativ für Werte modulo n der periodischen Übertragungsfunktion enthält, wobei der Zähler modulo n (9) mit besagtem Speicher für seine sequentielle Adressierung verbunden ist.

21. Vorrichtung gemäß einem der Ansprüche 19 oder 20, dadurch gekennzeichnet, daß sie (a) ein Speicherregister (5) der Konstante (A) und einen Addierer (4), ausgebildet zum Empfang der Digitaldaten (M) und besagter Konstanten (A) und eingerichtet zum Abgeben der Parameter (A + M) zum Speicherregister (6), umfaßt.

22. Vorrichtung gemäß einem der Ansprüche 19, 20 oder 21, dadurch gekennzeichnet, daß sie (a) einen Speicher (1) zum vorhergehenden Speichern von digitalen Daten (M) und Mittel (2) zum Adressieren besagten Speichers gesteuert durch das Ladesignal (Ch) umfaßt, um die Daten bei jedem Ladeschritt zu liefern.

23. Vorrichtung gemäß einem der Ansprüche 19, 20, 21 oder 22 zum Übertragen von digitalen Daten (M), die repräsentativ für ein Bild sind, dadurch gekennzeichnet, daß sie einen Kodeumwandler (3) zur Histogrammegalisation, ausgebildet zum Empfang der digitalen Daten und eingerichtet zum Liefern von korrigierten digitalen Daten, die ein Spektrum verteilt über die Gesamtheit von möglichen Niveaus von Daten (M) besitzen, umfaßt.

24. Vorrichtung gemäß einem der Ansprüche 19, 20, 21, 22 oder 23, dadurch gekennzeichnet, daß sie (b) einen Linienadaptionstransformator (14), der das Analogsignal (5a) und eine kontinuierliche Komponente empfängt, um ein verschobenes Analogsignal (S′a) zu liefern, das immer das gleiche Vorzeichen aufweist, und einen Verstärker (21) mit variablem Verstärkungsfaktor aufweist, der besagtes analoges verschobenes Signal (S′a) und ein Verstärkungsfaktorregelsignal (Rg) empfängt, um ein verstärktes Analogsignal (S″a) zu liefern, das sich über eine vorbestimmte Maximalamplitude erstreckt.

25. Vorrichtung gemäß Anspruch 24, dadurch gekennzeichnet, daß
der Linienadaptionstransformator (14) einem Digital/Analog-Wandler (15), gesteuert durch Rechenmittel (16, 17, 18), das Signal (Ne) empfangend, zugeordnet ist, um in geschlossener Schleife ein Digitaldatum (Dc) mit kontinuierlicher Komponente zu extrahieren,
der Verstärker (21) mit variablem Verstärkungsfaktor einem Digital/Analog-Wandler (22), gesteuert durch Rechenmittel (6, 17, 18), das Signal (Ne) empfangend, zugeordnet ist, um in geschlossener Schleife ein digitales Datum (Dg) für den Verstärkungsfaktor zu extrahieren.

26. Vorrichtung gemäß einem der Ansprüche 19, 20, 21, 22, 23 , 24 oder 25, dadurch gekennzeichnet, daß (c) die logischen Operatoren, geeignet zum Liefern der Amplitudendaten (D$_A$), einen Komparator (25) zur Maximumextraktion, einen Komparator (26) zur Minimumextraktion und einen Subtrahierer (27), ausgebildet zum Bilden der Differenz von Signalen, abgegeben von den Komparatoren, umfassen.

27. Vorrichtung gemäß Anspruch 26, dadurch gekennzeichnet, daß die logischen Operatoren, geeignet zum Abgeben der Arbeitsschwellwerte, einen Multiplizierer (29), der mit dem Subtrahierer (27) und Mitteln (28) zum Speichern von normierten Schwellwerten verbunden ist, und einen Addierer (44), der mit besagtem Multiplizierer (29) und dem Komparator (26) zur Mimimumextraktion verbunden ist, umfassen.

28. Vorrichtung gemäß Anspruch 21, dadurch gekennzeichnet, daß die Rechenmittel in Reihenschaltung einen Teiler (32), der das Digitalsignal (Nd) und die normierten Abstände empfängt, einen Addierer/Teiler (33), eingerichtet zum Berechnen des Mittelwertes (Vm) von Werten (Vs), ausgegeben vom Teiler (32), einen Multiplizierer (34) mit dem Koeffizienten ($\lambda$), einen Teiler (35) für korrigierte Werte (Vc), ausgegeben vom Multiplizierer (34), durch den Parameter, Funktion modulo Zählung n, und einen Subtrahierer (36), der die Konstante (A) empängt, um sie von den Resultaten (A + M), ausgegeben vom Teiler (35), abzuziehen, enthalten.

29. Vorrichtung gemäß einem der Ansprüche 19 bis 28, dadurch gekennzeichnet, daß sie einen Ausgangsspeicher (42) zum Speichern von berechneten Daten und Mittel (43) zum Adressieren besagten Speichers umfaßt, die durch einen Sequenzeur (20) gesteuert werden, der das validisierte Digitalsignal (Na), ausgegeben von Komparatoren (30) empfängt, um eine Sequenzierung zur Frequenz dieses Signals sicherzustellen.

**Claims**

1. Method for transmitting numerical data (M) in the form of a sequence of words ($M_1$, $M_2$, $M_3$ ...) with a view to allowing a high transmission rate for a given transmission frequency band, in which (a), in a coding phase, the data are converted into a periodic analog signal produced from the numerical data by generating from the said data and from a reference frequency (F) a numerical signal (Nv) with a frequency which is a function of the said data in a time base related to the reference frequency (F), so that each period of the said numerical signal is composed of p fractions of a period, each one a function of a data word ($M_1$, $M_2$ ...), executing on the said numerical signal (Nv) a periodic transfer function of a predetermined form, notably sinusoidal, so as to generate a transcoded numerical signal (Nt) representing the previous signal (Nv) and having a periodic distribution related to the said transfer function, and effecting a numerical to analog conversion of the said transcoded signal (Nt), (b) the said analogue signal is transmitted and (c), in a decoding phase, the said signal is converted into a numerical signal, representing the data (M), produced from the analogue signal transmitted, by converting the latter into a numerical signal (Ne) by means of sampling at a second reference frequency (F') related to the first (F), producing from this numerical signal (Ne) and from the transfer function, working thresholds delimiting in the said numerical signal p fractions of a period corresponding to those of the coding, analysing the numerical signal (Ne) between the said working thresholds in a time base corresponding to the reference frequency (F'), so as to generate a numerical signal (Nd) representing the periods between working thresholds, and calculating from this numerical signal (Nd) the sequence of data words ($M_1$, $M_2$ ...), characterised in that the said number p of fractions of a period is greater than 2.

2. Method for transmitting numerical data (M) in the form of a sequence of words ($M_1$, $M_2$, $M_3$ ...), with a view to allowing a high transmission rate for a given transmission frequency band, the said method being characterised in that it consists of:
   a) in a coding phase,
      . generating a first electrical time-reference signal ($H_1$), comprising reference pulses at a high frequency (F),
      . successively loading a parameter (A + M) which is a function of each word ($M_1$, $M_2$ ...) into a storage register as demanded by a loading signal (Ch) composed of a sequence of loading pulses,
      . dividing the reference signal ($H_1$) by the parameter (A + M) contained in the storage register in order to deliver a data time signal (Td) with a frequency ($F/_{A+M}$) varying discretely and inversely with the sequence of words ($F/_{A+M1}$, $F/_{A+M2}$ ...),
      . effecting a modulo n count of the data time signal (Td) with a view to delivering a numerical signal (Nv) consisting of the counting values, n being an integer chosen in accordance with the desired fidelity of transmission,
      . effecting a linear combination of the said numerical signal (Nv) so as to validate this signal step by step, by means of incrementation steps (P), equal in number to p, p being greater than 2 and equal to or less than n, of durations $d_1$, $d_2$ ... $d_l$ ... $d_p$, with a view to generating the aforesaid loading signal (Ch) comprising a loading pulse at the end of each step (P),
      . executing a periodic transfer function,

of frequency $\dfrac{F}{n.(A + M)}$, on the numerical signal (Nv), so as to deliver a transcoded numerical signal (Nt) representing the levels of the transfer function for the values of the numerical signal (Nv),

. converting the transcoded numerical signal (Nt) into an analogue signal (Sa), with a calibrated maximum amplitude, with a view to delivering a periodic analogue signal having as its envelope the aforesaid transfer function and each period of which is composed of p fractions of a period, each being a function of a word ($M_1$, $M_2$ ...),

b) transmitting this analogue signal (Sa) and receiving it with appropriate matching (S"a),

c) in a decoding phase:

. generating a second electrical time-reference signal ($H_2$), of a frequency (F′) related to the frequency (F) of the first reference signal ($H_1$) in a constant ratio $\lambda = F/F′$,

. converting the adapted analogue signal (S"a), with a sampling frequency F′, into a numerical signal (Ne) which is the image of the transcoded numerical signal (Nt),

. extracting and storing the maximum and minimum limits (MIN, MAX) of the said numerical signal (Ne), with a view to generating data characterising the signal (Ne), referred to as amplitude data ($D_A$),

. storing, for each of the aforesaid p incrementation steps, on the one hand at least two thresholds of the periodic transfer function for a standard amplitude of the latter, and on the other hand the differences in time between the said thresholds referenced to the period of the transfer function, the said thresholds being referred to as "standard thresholds" and the said differences as "standard differences",

. effecting a rescaling of the said standard thresholds as a function of the amplitude data ($D_A$), with a view to obtaining threshold values shifted in accordance with the said amplitude data, referred to as working thresholds,

. comparing the numerical signal (Ne) with the working thresholds with a view to generating a numerical signal (Na) validated during the periods between working thresholds,

. counting the number of reference pulses of the second reference signal ($H_2$) in the presence of the validated numerical signal (Na), so as to generate a numerical signal (Nd) with several counting values which represent the periods during which the validated numerical signal (Na) is present,

. dividing each value of the aforesaid numerical signal (Nd) by the corresponding standard difference, with a view to generating a sequence of values (Vf), each being referred to the period of the periodic transfer function,

. for each incrementation step (P), taking, where appropriate, the mean of the said values (Vs) with a view to generating a numerical signal (Nm) with p mean values (Vm) as a function of the sequence of words ($M_1$, $M_2$ ...),

. where F′ is different from F, multiplying each of the said p mean values by the coefficient $\lambda$ with a view to obtaining a sequence of p corrected values (Vc),

. dividing each of the aforesaid corrected values (Vc) by a parameter which is a function of the modulo n with a view to obtaining a sequence of results ($A + M_1$, $A + M_2$ ...), and deriving the sequence of words ($M_1$, $M_2$ ...) constituting the numerical data.

3. Transmission method according to Claim 2, characterised in that (a) in the coding phase:

- in order to generate the loading signal (Ch), a linear combination of the numerical signal (Nv) is effected by validating this signal over four incrementation steps (P) of the same duration,

- on the said numerical signal (Nv) a sinusoidal transfer function is executed, considered over one period so that each quarter of a period of the said function corresponds to one incrementation step (P), the counting values of the said numerical signal (Nv) being transformed into sinusoid levels distributed over a period in order to constitute the transcoded numerical signal (Nt).

4. Transmission method according to Claim 3, characterised in that (a), in the coding phase, a modulo $n = 2^b$ binary count of the data time signal (Td) is effected, where $b \geqq 6$, so as to deliver a binary numerical signal (Nv) with b bits of increasing weight.

5. Transmission method according to Claim 4, characterised in that (a), in the coding phase:

- the sinusoidal transfer function is first stored in the form of a table, the said table comprising data representing the modulo n values of the said function at predetermined addresses,

- the transfer function is executed by addressing the said table successively by means of binary counting values of the numerical signal (Nv) and extracting simultaneously the corresponding data contained in the table.

6. Transmission method according to one of Claims 2, 3, 4 or 5, characterised in that (a) in the coding phase:

- the sequence of words ($M_1$, $M_2$ ...) to be transmitted is first stored in a memory,
- the said memory is addressed with a view to selecting each word in succession, by an activation provided by the loading signal (Ch),
- the parameter (A + M) which is a function of the word thus addressed is loaded into the storage register, as demanded by the loading signal (Ch).

7. Transmission method according to Claim 6, characterised in that (a) in the coding phase:

- before each division of the reference signal ($H_1$), the parameter (A + M) is calculated by adding the addressed word ($M_1$, $M_2$ ...) to a constant (A),
- this parameter is loaded into the storage register as demanded by the loading signal (Ch) with a view to effecting the division of the reference signal ($H_1$).

8. Transmission method according to one of the preceding claims, characterised in that (a) in the coding phase:

- a calibration signal (Ref), adjustable by external command, is first generated,
- the transcoded numerical signal (Nt) is converted into an analogue signal (Sa), using this calibration signal as an amplitude reference.

9. Transmission method according to one of the preceding claims, characterised in that (b) the analogue signal (Sa) is matched to its reception by adding to it a continuous component such that the resulting signal, referred to as the shifted analogue signal (S′a), always keeps the same sign.

10. Transmission method according to Claim 9, characterised in that:

- (b) the shifted analogue signal (S′a) is amplified with a variable gain adjusted sequentially so as to deliver an amplified analogue signal (S″a) extending over a predetermined maximum amplitude,

- (c) in the decoding phase, the conversion is carried out on this amplified analogue signal (S″a) by an analogue to digital converter with a conversion range equal to the aforesaid maximum amplitude.

11. Transmission method according to Claim 3, characterised in that (c), in the decoding phase, the following standard thresholds are stored for the sinusoidal transfer function: threshold 1/2, threshold 3/4, threshold 7/8 with the relative standard differences 1/3 and 1/5 for the first incrementation step; threshold 7/8, threshold 3/4, threshold 1/2 with the relative standard differences 1/5 and 1/3 for the second incrementation step; threshold 1/2, threshold 1/4, threshold 1/8 with the relative standard differences 1/3 and 1/5 for the third incrementation step; and threshold 1/8, threshold 1/4, threshold 1/2 with the relative standard differences 1/5 and 1/3 for the fourth incrementation step.

12. Transmission method according to Claims 2 and 10 taken together, characterised in that (c), in the decoding phase, the standard thresholds are rescaled by carrying out translation and homeothetic transformation operations on the stored standard thresholds so as to cause the minimum and maximum values of the sinusoidal transfer function to coincide, respectively, with the minimum and maximum limits of the numerical signal (Ne).

13. Transmission method according to Claims 11 and 12 taken together, characterised in that (c), in the decoding phase, the rescaling is carried out by calculating the difference between the minimum limit (MIN) and maximum limit (MAX) of the numerical signal ($N_e$), multiplying each standard threshold by this difference and adding the said minimum limit (MIN) to the result to obtain the corresponding working threshold.

14. Transmission method according to Claim 11, characterised in that (c) in the decoding phase:

- the counting values of the numerical signal (Nd) are divided by the following standard differences: 1/3 and 1/5,
- the values obtained (Vs) are averaged in pairs with a view to generating the numerical signal (Nm) at four average values (Vm) over one period.

15. Transmission method according to Claim 7, characterised in that (c), in the decoding phase, the sequence of words is derived by subtracting the constant (A) from the sequence of parameters calculated.

16. Transmission method according to Claims 13, 14 and 15 taken together, characterised in that (c) in the decoding phase, the rescaling operation, the counting operation, the operation of dividing by the standard difference, the average-calculation operation, the operation of multiplication by the coefficient λ, the operation of division by the corrected value (Vc) and the operation of subtraction of the constant (A) are carried out successively in real time in a data stream in order to deliver a numerical signal representing the sequence of words $(M_1, M_2 ...)$, the said numerical signal being subsequently stored.

17. Process in accordance with one of the preceding claims, for transmitting numerical data (M) representing an image, in which each word $(M_1, M_2 ...)$ represents the grey level of a point among a number G of discrete grey levels, characterised in that each parameter (A + M) is computed by adding the word corresponding to a constant (A) lying between 2 G and 3.5 G.

18. Device for transmitting numerical data (M) in the form of a sequence of words $(M_1, M_2, M_3 ...)$, for implementing the method according to one of the preceding claims, comprising a coding unit for converting the data into an analogue signal (Sa) representing the data, means for transmitting and matching the analogue signal and a decoding unit for the purpose of reconstructing the said numerical data, the said device being characterised in that:
(a) the coding unit comprises a clock (8) of frequency (F), means (1-10) for generating the numerical signal (Nv) with a frequency which is a function of (F) and data words (M) such that each period of the said numerical signal is composed of a number p, greater than 2, of fractions of a period, each one being a function of a data word $(M_1, M_2 ...)$, a periodic transcoder (11), and a digital to analogue converter (12),
(c) the decoding unit comprises a clock (19) of frequency (F') related to the frequency (F), an analogue to digital converter (23) sequenced by the clock (8) to deliver the numerical signal (Ne), means (25-29, 44) for generating working thresholds from this signal (Ne), means (30, 31) for analysing the said numerical signal (Ne) between the said working thresholds, and means for computing the sequence of words (32-40).

19. Device for transmitting numerical data (M) for implementing the method in according to one of Claims 2 to 7, comprising a coding unit for converting the data into an analogue signal (Sa) representing the data, means for transmitting and matching the analogue signal and a decoding unit for the purpose of reconstructing the said numerical data, the said device being characterised in that:
(a) the coding unit comprises a clock (8) for generating a first electrical time-reference signal $(H_1)$, a storage register (6) controlled by a loading signal (Ch) with a view to loading successively parameters (A + M) which are a function of the numerical data, a programmable divider (7) arranged so as to receive the first time-reference signal $(H_1)$ and the parameters (A + M) coming from the register (6) with a view to delivering a data time signal (Td), a modulo n counter (9) arranged so as to receive the said data time signal (Td) with a view to delivering a numerical signal (Nv), a linear logic operator (10) arranged so as to receive the numerical signal (Nv) with a view to validating this system step by step with a number of steps equal to p, p being greater than 2 and equal to or less than n, per period of the said numerical signal, and with a view to generating the loading signal (Ch), a periodic transcoder (11) arranged so as to receive the numerical signal (Nv) with a view to delivering a transcoded numerical signal (Nt) representing the levels of a transfer function for the values of the said numerical signal, and a digital to analogue converter (12) arranged so as to receive the transcoded numerical signal (Nt) and a calibration signal (Ref) with a view to delivering the analogue signal (Sa),
(c) the decoding unit comprises a clock (19) for generating a second electrical time-reference signal $(H_2)$, an analogue to digital converter (23) arranged so as to receive the analogue signal transmitted (S"a) and the second time-reference signal $(H_2)$ with a view to delivering a numerical signal (Ne) from the said analogue signal, logic operators (25, 26, 27) arranged so as to receive the numerical signal (Ne) with a view to delivering amplitude data $(D_A)$, means (28) for storing standard thresholds of the periodic transfer function, means (37) for storing corresponding standard differences of the said periodic transfer function, logic operators (29, 44) arranged so as to receive standard thresholds coming from the storage means (28) and the amplitude data $(D_A)$ with a view to delivering working thresholds, comparators (30) arranged so as to receive the working thresholds and the numerical signal (Ne) with a view to validating the said numerical signal during the periods between working thresholds, counters (31) receiving the validated numerical signal (Na) and the second time-reference signal $(H_2)$ with a view to delivering a numerical signal (Nd) with values representing the periods between working thresholds, calculation means (32-36) arranged so as to receive the numerical signal (Nd), the standard differences coming from the storage means (37), possibly a value (A) corresponding to the (A + M) parameter, possibly a coefficient ($\lambda$), and the second time-reference signal (H$_2$), with a view to effecting calculation operations sequentially in order to deliver the sequence of words constituting the numerical data.

20. Device according to Claim 19, characterised in that (a) the periodic transcoder (11) comprises a memory containing data representing values, modulo n, of the periodic transfer function, the modulo n counter (9) being connected to the said memory with a view to its sequential addressing.

21. Device according to one of Claims 19 or 20, characterised in that it comprises (a) a register (5) for storing the constant (A) and an adder (4) arranged so as to receive the numerical data (M) and the said constant (A) and adapted for delivering the parameters (A + M) to the storage register (6).

22. Device according to one of Claims 19, 20 or 21, characterised in that it comprises (a) a memory (1) for the prior storage of the numerical data (M) and means (2) for addressing the said memory controlled by the loading signal (Ch) with a view to delivering the data at each loading step.

23. Device according to one of Claims 19, 20, 21 or 22 for transmitting numerical data (M) representing an image, characterised in that it comprises a histogram equalisation transcoder (3) arranged so as to receive the numerical data and adapted for delivering corrected numerical data with a spectrum distributed over all possible levels of the data (M).

24. Device according to one of Claims 19, 20, 21, 22 or 23, characterised in that it comprises (b) a line matching transformer (14) receiving the analogue signal (Sa) and a continuous component (Cc) for the purpose of delivering a shifted analogue signal (S'a) always keeping the same sign, and a variable-gain amplifier (21) receiving the said shifted analogue signal (S'a) and a gain-adjustment signal (Rg) for the purpose of delivering an amplified analogue signal (S''a) extending over a predetermined maximum amplitude.

25. Device according to Claim 24, characterised in that:
   - the line matching transformer (14) is associated with a digital to analogue converter (15) controlled by calculation means (16, 17, 18) receiving the signal (Ne) with a view to extracting from it, in closed loop, numerical data representing the DC component (Dc).
   - the variable gain amplifier (21) is associated with a digital to analogue converter (22) controlled by calculation means (16, 17, 18) receiving the signal (Ne) with a view to extracting from it, in closed loop, numerical gain data (Dg).

26. Device according to one of Claims 19, 20, 21, 22, 23, 24 or 25, characterised in that (c) the logic operations adapted for delivering the amplitude data (D$_A$) comprise a comparator (25) for extracting the maximum value, a comparator (26) for extracting the minimum value and a subtracter (27) arranged so as to produce the difference between the signals coming from the comparators.

27. Device according to Claim 26, characterised in that (c) the logic operators adapted for delivering the working thresholds comprise a multiplier (29) connected to the subtracter (27) and to the means (28) for storing the standard thresholds, and an adder (44) connected to the said multiplier (29) and to the comparator (26) for extracting the minimum value.

28. Device according to Claim 21, characterised in that the calculation means comprise, in series, a divider (32) receiving the numerical signal (Nd) and the standard differences, an adder/divider (33) arranged so as to calculate, on each step, the mean (Vm) of the values (Vs) coming from the divider (32), a multiplier (34) for multiplying by the coefficient ($\lambda$), a divider (35) for dividing the corrected values (Vc) coming from the multiplier (34) by the parameter which is a function of the modulo n count, and a subtracter (36) receiving the constant (A) with a view to subtracting it from the results (A + M) coming from the divider (35).

29. Device according to one of Claims 19 to 28, characterised in that it comprises an output memory (42) for storing the calculated data and means (43) for addressing the said memory controlled by a sequencer (20) receiving the validated numerical signal (Na) coming from the comparators (30) with a view to providing a sequencing at the frequency of this signal.

Fig. 1

Fig. 2

Données

M1 M2 M3 M4

H₁

Td

PAS PAS PAS PAS

Nv

Ch

Nt

Sa

Calibrage

Fig. 3

Fig. 4

EP 0 423 119 B1

Fig. 5

EP 0 423 119 B1

Fig. 6